# EUROPÄISCHE PATENTSCHRIFT

(11) **EP 4 100 694 B1**
(45) Veröffentlichungstag und Bekanntmachung des Hinweises auf die Patenterteilung: **27.09.2023**
(21) Anmeldenummer: 21836376.0
(22) Anmeldetag: 07.12.2021
(51) Int. Cl.: G01B 11/25, A61C 9/00, G02B 27/42

(54) **VERFAHREN UND INTRAORALSCANNER ZUM ERFASSEN DER TOPOGRAPHIE DER OBERFLÄCHE EINES TRANSLUZENTEN, INSBESONDERE DENTALEN, OBJEKTES**
METHOD AND INTRAORAL SCANNER FOR DETECTING THE TOPOGRAPHY OF THE SURFACE OF A TRANSLUCENT OBJECT, IN PARTICULAR A DENTAL OBJECT
PROCÉDÉ ET SCANNER INTRABUCCAUX POUR DÉTECTION DE TOPOGRAPHIE DE SURFACE D'UN OBJET TRANSLUCIDE, EN PARTICULIER UN OBJET DENTAIRE

(30) Priorität: 15.12.2020 DE 102020133627
(43) Veröffentlichungstag der Anmeldung: 14.12.2022
(73) Patentinhaber: Infinisense Technologies GmbH, 81677 München (DE)
(72) Erfinder: WISSMANN, Patrick, 81677 München (DE); ULRICH, Nicolas Emanuel, 81541 München (DE)
(74) Vertreter: Grättinger Möhring von Poschinger Patentanwälte Partnerschaft mbB
(86) Internationale Anmeldenummer: PCT/EP2021/084571
(87) Internationale Veröffentlichungsnummer: WO 2022/128621

(56) Entgegenhaltungen:
- DE-A1-102014 212 231
- DE-A1-102015 205 187
- JP-A- 2019 164 325
- US-A1- 2019 213 753
- US-A1- 2019 388 193
- PRYGUN A V ET AL: "Experimental research of speckle suppression efficiency in the entire visible spectrum using moving 3D composite diffraction grating", JOURNAL OF OPTICS, SPRINGER INDIA, NEW DELHI, Bd. 47, Nr. 2, 27. Oktober 2017 (2017-10-27), Seiten 220-228, XP036527930, ISSN: 0972-8821, DOI: 10.1007/S12596-017-0437-7 [gefunden am 2017-10-27]

## Beschreibung

Die Erfindung betrifft ein Verfahren sowie einen Intraoralscanner zum Erfassen der Topographie der Oberfläche eines transluzenten, insbesondere dentalen, Objektes.

Verfahren und Intraoralscanner zum Erfassen der Topographie der Oberfläche transluzenter, insbesondere dentaler, Objekte sind aus dem Stand der Technik bekannt und werden insbesondere im Bereich der Zahnheilkunde eingesetzt, um die Zahnsituation eines Patienten dreidimensional (3D-Erfassung) und digital zu erfassen. Die Erfassung erfolgt dabei typischerweise mittels eines Intraoralscanners (auch 3D-Intraoralkamera oder 3D-Intraoralscanner genannt), der ein sogenanntes Handstück (engl. "hand piece") mit einer Erfassungseinrichtung umfasst.

Während des Vorgangs der Erfassung der Topographie (der allgemein auch als Scanvorgang, oder engl. "Intraoral-Scanning" bezeichnet wird führt ein Bediener eine sog. Scanspitze des Handstücks in der Mundhöhle des Patienten über die zu erfassende dentale Region bzw. die zu erfassende dentale Oberfläche. Die dentale Oberfläche wird in der Regel durch dentale Objekte wie Zähne, Zahnfleisch, Zahnrestorationen oder dentale Hilfsmittel wie z.B. sogenannte "Scan Bodies" oder "Abutments" ausgebildet. Das Ergebnis des Scanvorgangs ist eine erfasste Topographie des erfassten Objekts (im Bereich Intraoralscannen auch "digitaler (Zahn-)Abdruck" genannt).

Der Begriff Topographie bezeichnet im Bereich der Messtechnik die Beschreibung der (geometrischen) Gestalt eines Objekts. Eine messtechnisch erfasste Topographie kann beispielsweise durch eine Mehrzahl dreidimensionaler Messpunkte (auch Punktwolke bzw. engl. "point cloud" genannt), durch ein dreidimensionales Dreiecksnetz (engl. "mesh" oder "triangle mesh"), oder durch eine oder mehrere Tiefenkarten (engl. "depth map") gegeben sein. Eine Tiefenkarte ist dabei ein digitales, aus Bildelementen (Pixeln) bestehendes Bild, wobei die Pixel "Tiefenwerte" repräsentieren. Die Tiefenwerte einer Tiefenkarte entsprechen jeweiligen Abständen von einem lokalen Koordinatensystem des Intraoralscanners (oder allgemein einer 3D-/Tiefenkamera) zur Oberfläche des erfassten Objekts, aus der jeweiligen Erfassungsposition bzw. Blickrichtung.

Intraoralscanner können auch außerhalb von Mundhöhlen eingesetzt werden um die Topographie der Oberfläche von dentalen oder anderen Objekten (z.B. einem Zahnmodell oder einem nicht mit der Zahnheilkunde im Zusammenhang stehenden Bauteil) zu erfassen.

Während des Scanvorgangs werden Teiltopographien der aktuell erfassbaren (bzw. einsehbaren) Teiloberflächen in Form von dreidimensionalen Daten erfasst. Diese Teiloberfläche entspricht meist einem kleinen Ausschnitt der gesamten zu erfassenden Oberfläche. Zur Erfassung der (Gesamt-)Topographie der gesamten Oberfläche werden während der Bewegung der Scanspitze (über die zu erfassende Oberfläche) eine Vielzahl von erfassten Teiltopographien von Teiloberflächen zusammengesetzt, was auch als "Registrierung", "Alignment", "Stitching", oder "SLAM" (engl. "Simultaneous Localization and Mapping") bezeichnet wird. Die Vielzahl der Teiltopographien der Teiloberflächen (Teilbereiche der Oberfläche) wird somit zu der (Gesamt-)Topographie der zu erfassenden Oberfläche zusammengesetzt, wodurch eine dreidimensionale Erfassung der gesamten zu erfassenden Oberfläche (Region) erfolgt. Die Erfassung der Topographie erfolgt somit während die Scanspitze (kontinuierlich) mit einer gewissen Bewegungsgeschwindigkeit (entlang eines Bewegungspfads) über die zu erfassende Oberfläche bewegt wird. Dabei ist es der Praxistauglichkeit zuträglich, wenn die Erfassung der Topographie auch noch bei relativ hohen Bewegungsgeschwindigkeiten verlässlich mit hoher Gesamterfassungsgenauigkeit gelingt.

Insbesondere im Bereich der Zahnheilkunde ist es dabei typischerweise erforderlich, dass die Topographie der Oberfläche mit einer Genauigkeit von mindestens 50 um erfasst wird (Gesamterfassungsgenauigkeit). Um diese Gesamterfassungsgenauigkeit zu erreichen, ist es typischerweise notwendig die einzelnen zur (Gesamt-)Topographie zusammengesetzten Teiltopographien mit einer noch höheren Genauigkeit (die beispielsweise in einem Bereich von 5 bis 10 um liegen kann) zu erfassen (Teilerfassungsgenauigkeit), da sich Erfassungsungenauigkeiten einzelner Teiltopographien im Zuge der Zusammensetzung zur (Gesamt-)Topographie der Oberfläche addieren können.

Im Stand der Technik sind verschiedene Verfahren zur Erfassung der Topographie einer Oberfläche bekannt. Die vorliegende Erfindung bezieht sich auf das bekannte Verfahren der "strukturierten Beleuchtung" in Verbindung mit dem bekannten Verfahren der Triangulation, gemeinsam auch als "aktive Triangulation" bezeichnet.

Bei der strukturierten Beleuchtung werden ein oder mehrere Messmuster, welche typischerweise jeweils mehrere Messelemente (z.B. Messlinien, punktförmige Messelemente) umfassen, mit Hilfe einer Lichtquelle in Richtung einer Projektionsachse auf eine Oberfläche eines Objekts projiziert. Dadurch wird die Oberfläche des Objekts durch das Messmuster (bzw. durch die Messelemente) beleuchtet, sodass lediglich die den Messelementen zugeordneten Abschnitte der Oberfläche von der Lichtquelle mit hoher Lichtintensität beleuchtet werden, während die zwischen den beleuchteten Abschnitten liegenden Bereiche der Oberfläche nicht (direkt) von der Lichtquelle beleuchtet werden und somit eine geringere Lichtintensität aufweisen. Die Lichtintensität variiert demnach örtlich entlang der Oberfläche, weshalb diese Art der Beleuchtung der Oberfläche auch als strukturierte Beleuchtung bezeichnet wird.

Mittels einer Erfassungseinrichtung (z.B. einer Kamera) wird ein Bild der auf die Oberfläche projizierten Messelemente des Messmusters entlang einer von der Projektionsachse abweichenden Erfassungsachse aufgenommen. Die Topographie der Objektoberfläche bewirkt eine räumliche Verzerrung der Messmuster aus Sicht der Erfassungseinrichtung. Diese Verzerrung wird im Rahmen der Triangulation genutzt, um mittels geometrischer Berechnungen die Topographie der Objektoberfläche zu erfassen, indem für eine Vielzahl von auf den Messelementen liegenden Messpunkten dreidimensionale Koordinaten bestimmt werden. Die korrekte Bestimmung der dreidimensionalen Koordinaten der Messpunkte setzt dabei die Lösung des sogenannten Korrespondenzproblems voraus, wonach im erfassten Bild der Erfassungseinrichtung jedes einzelne Messelement individuell identifiziert werden muss. In diesem Zusammenhang wird auch davon gesprochen, dass (die einzelnen) Messelemente kodiert oder indiziert sind und somit die Lösung des Korrespondenzproblems ermöglichen. Im Stand der Technik sind dabei eine Vielzahl von Verfahren zur Lösung des Korrespondenzproblems bekannt, bei denen die Messelemente beispielsweise mittels unterschiedlicher Farben (farbkodierte Messelemente) und/oder durch eine charakteristische An- oder Abwesenheit von Messelementen in erfassten Bildern (anwesenheitskodierte Messelemente) kodiert sind. Dabei sind sowohl zeitliche Abfolgen (zeitliche Kodierung) als auch räumliche Abfolgen (räumliche Kodierung) sowie Mischformen beider Ansätze bekannt (hybride Kodierung).

Bei einer zeitlichen Kodierung erfolgt die Kodierung eines Messelements über einen sich über mehrere Projektionen/Erfassungen hinweg charakteristisch verändernden Bildinhalt, beispielsweise eine Messlinie die in einer Sequenz aus mehreren Projektionen/Erfassungen auf charakteristische Weise in den erfassten Bildern an- oder abwesend ist. Eine rein zeitliche Kodierung zeichnet sich dadurch aus, dass jedes Messelement einzeln kodiert ist, d.h. es ist keine Umgebung von Messelementen zur Lösung des Korrespondenzproblems erforderlich. Dementgegen steht eine vergleichsweise hohe Anzahl von Projektionen/Erfassungen.

Bei einer räumlichen Kodierung erfolgt die Kodierung eines Messelements über einen sich in der Umgebung des Messelements befindlichen charakteristischen Bildinhalt, beispielsweise die An- oder Abwesenheit von weiteren (Mess-)Linien in der Umgebung des Messelements. Entsprechend erfordert die Lösung des Korrespondenzproblems die Erfassung einer Umgebung von Messelementen; ein einzelnes Messelement kann nicht unmittelbar aufgelöst werden. Man spricht in diesem Zusammenhang auch von einer minimal auflösbaren Sequenz bzw. Umgebung von Messelementen, beispielsweise könnte eine Erfassung von n benachbarten Messelementen zur Lösung des Korrespondenzproblems für diese Messelemente erforderlich sein. Diesem Nachteil steht der Vorteil einer vergleichsweise geringen Anzahl von Projektionen/Erfassungen gegenüber.

Eine hybride Kodierung entspricht einer Kombination aus einer räumlichen und zeitlichen Kodierung. Die Wahl eines Kodierungsansatzes (zeitlich, räumlich oder hybrid) hängt entscheidend von den Rahmenbedingungen und Zielsetzungen der jeweiligen Anwendung ab. Beispielsweise kann eine hybride Kodierung einen Kompromiss darstellen, bestehend aus einer Anzahl von Projektionen/Erfassungen die geringer ist als bei einer rein zeitlichen Kodierung, und einer minimal auflösbaren Sequenz bzw. Umgebung von Messelementen die geringer ist als bei einer rein räumlichen Kodierung.

Ebenfalls ist im Stand der Technik die Nutzung zusätzlicher Muster- oder Mustersequenzen bekannt die ausschließlich der Lösung des Korrespondenzproblems dienen, beispielsweise eine aus Streifenmustern bestehende Gray-Code-Sequenz.

In der Praxis werden eines oder mehrere verschiedene Messmuster projiziert. Die Messmuster können eine oder mehrere Messlinien (als Messelemente) umfassen oder auch gänzlich anders gestaltet sein, z.B. in Form von Punktmustern oder farbkodierten Streifenmustern.

Das Dokument WO 2018073824 A1 offenbart eine Vorrichtung und ein Verfahren zur Erfassung intraoraler Szenen mittels strukturierter Beleuchtung und Triangulation. Die Erfassung erfolgt mittels einer farbkodierten, abbildenden Messmusterprojektion auf das zu erfassende Objekt sowie der Aufnahme des projizierten Messmusters mittels einer Kamera. Nach einer Erkennung der Farbübergänge wird entsprechend des bekannten Verfahrens der aktiven Triangulation eine 3D-Erfassung realisiert.

Das abbildend projizierte, farbkodierte Messmuster kann mit im Stand der Technik bekannten Verfahren mit einer weißen Lichtquelle und entsprechenden Farbfiltern erzeugt werden, welche z.B. in Form eines Dias vorliegen. Dieses Dia wird von einem Projektionsobjektiv auf die Objektoberfläche abgebildet.

Das Dokument DE 102007054907 A1 beschreibt ebenfalls ein Verfahren sowie eine zugehörige Vorrichtung zur optischen Vermessung von dentalen Objekten unter Verwendung eines Triangulationsverfahrens, wobei (mindestens) zwei verschiedene Messmuster gleichzeitig projiziert und aufgenommen werden. Die Messmuster werden dabei durch Abschattung erzeugt, indem Lichtquellen als Gitter ausgebildete Blendenmittel durchleuchten (vgl. Absatz [0091]).

Das Dokument WO 2020102658 A2 offenbart ein Laserprojektionssystem für einen Intraoralscanner. Hierbei wird der Strahl einer Laserdiode mittels optischer Elemente aufgeweitet und hinsichtlich Lichtintensität flächenhaft homogenisiert, um einen räumlichen Lichtmodulator (engl. "spatial light modulator") zu beleuchten. Ein räumlicher Lichtmodulator erzeugt mittels räumlich diskreter und wahlweiser Reflektion oder Absorption ein Messmuster, welches mittels eines Projektionsobjektivs auf die Objektoberfläche projiziert wird. Durch Auswertung des projizierten Bildes mittels eines Erfassungssystems wird nach dem bekannten Verfahren der aktiven Triangulation eine 3D-Erfassung realisiert.

Das Dokument WO 2019032923 A2 beschreibt ein Intraoralscanner-System, bei dem eine Beleuchtungseinheit (engl. "light engine"), welche z.B. aus einem oder mehreren Lasern besteht, einen reflektiven räumlichen Lichtmodulator beleuchtet, wobei ein doppeltes Prisma so gestaltet ist, dass der Strahlengang auf kleinem Raum gefaltet, und insbesondere in zu projizierendes Licht und in nicht zu projizierendes Licht getrennt werden kann. Die Trennung erfolgt dabei an der internen Schnittstelle des doppelten Prismas in Abhängigkeit des Winkels, in dem der Lichtmodulator das Licht reflektiert. Dies entspricht der Funktion eines Mikrospiegel-Arrays, wobei für jedes darstellbare Pixel eine Spiegelstellung dazu führt, dass Licht durch das nachfolgende Objektiv entweder projiziert, oder innerhalb des Projektors in einer sog. "Lichtfalle" absorbiert wird.

Die in den Dokumenten WO 2020102658 A2 und WO 2019032923 A2 beschriebenen Projektionsansätze haben gemeinsam, dass das projizierte Muster mittels Absorption oder Reflektion erzeugt wird. In beiden Fällen wird für Musterbereiche, die nicht die maximal erzeugbare Helligkeit aufweisen zwar Licht (in der Lichtquelle) erzeugt, dieses jedoch durch Absorption oder Reflexion in eine Lichtfalle nicht zur Beleuchtung des Objekts genutzt, sondern innerhalb des Projektors in Wärme umgewandelt.

Das Dokument US 2019388193 A1 beschreibt einen Intraoralscanner sowie ein zugehöriges Verfahren zum Erfassen von intraoralen Objekten. Hierzu sind im Intraoralscanner ein oder mehrere Lichtprojektoren und zwei oder mehrere Kameras angeordnet. Die Lichtprojektoren weisen jeweils ein mustererzeugendes optisches Element auf, das durch Diffraktion (Beugung) oder Brechung ein Lichtmuster erzeugen kann.

Das Dokument DE 102014212231 A1 offenbart ein Koordinatenmessgerät zur berührungslosen Vermessung von Oberflächen von Dentalabdrücken. Das Gerät umfasst hierzu eine optische Projektionseinheit, eine im Strahlengang der Projektionseinheit angeordneten Objektaufnahmeeinheit zur Aufnahme des Objekts, mindestens eine Kamera, sowie eine Bildverarbeitungseinheit zur Bestimmung der Koordinaten aus den von der Kamera aufgenommenen Bilddaten. Durch einen Polarisationsfilter zwischen Objekt und Kamera können "störenden Lichtreflexe", die bei der Erfassung der Oberfläche von Dentalabdrücken oftmals auftreten und die für die Bestimmung der Koordinaten erforderliche Bildverarbeitung erschweren, herausgefiltert werden.

In PRYGUN A V ET AL ("Experimental research of speckle suppression efficiency in the entire visible spectrum using moving 3D composite diffraction grating", 27. Oktober 2017 (2017-10-27), Band 47, Nr. 2, Seite 220-228) werden Ergebnisse einer experimentellen Untersuchung zur Effizienz der Speckle-Unterdrückung im gesamten sichtbaren Spektrum unter Verwendung eines beweglichen 3D-Komposit-Beugungsgitters vorgestellt.

Das Dokument DE 102015205187 A1 beschreibt ein Verfahren und eine entsprechende Vorrichtung zur Projektion von Linienmustersequenzen zur Erfassung einer Objektoberfläche mittels Triangulation. Dabei wird ein Gesamtmessmuster projiziert, welches als Messelemente eine

Reihenfolge von Messlinien aufweist, wobei eine jeweilige Kombination von erzeugten und/oder nicht erzeugten Messlinien im Gesamtmessmuster den jeweiligen Ort im Gesamtmessmuster kodiert. Im Dokument US 2019213753 A1 schlägt eine Messvorrichtung zur Oberflächenerfassung, die strukturiertes Licht mit einem zweidimensional kodierten Muster, in dem mehrere Arten von Wörtern, die jeweils eine unterschiedliche zweidimensionale Struktur haben und voneinander unterscheidbar sind, auf ein Messobjekt projiziert. Die Bestimmung der dreidimensionalen Position eines Zielpixels basiert dabei darauf, dass das zweidimensional kodierte Muster zweifach symmetrisch ist und ein vorbestimmtes Wort in der Spaltenrichtung für jede Spalte wiederholt wird.

Das Dokument JP 2019164325 A beschreibt ein Lichtquellensystem zur Verwendung in einer Oberflächenerfassungsvorrichtung. Das Lichtquellensystem weist dabei ein beugendes optisches Element mit einen Beugungsgitterabschnitt auf, mittels dessen eine Muster projiziert werden kann. Ferner weist das beugende optische Element auf einer anderen Oberfläche einen Lichtkorrekturabschnitt nullter Ordnung auf, um das in dem Beugungsgitterabschnitt erzeugte Licht nullter Ordnung zu reduzieren.

Ausgehend von diesem Stand der Technik liegt der vorliegenden Erfindung die Aufgabe zugrunde ein Verfahren (sowie einen Intraoralscanner) zum Erfassen der Topographie der Oberfläche eines transluzenten, insbesondere dentalen, Objektes bereitzustellen, welches sich durch verbesserte Praxistauglichkeit auszeichnet, insbesondere in Bezug auf eine hohe Erfassungsgenauigkeit, eine hohe zulässige Bewegungsgeschwindigkeit während des Scanvorgangs, eine hohe Schärfentiefe, eine Miniaturisierung des Handstücks und eine kostengünstige Realisierbarkeit. Im Hinblick auf die Erfassungsgenauigkeit soll die Erfindung dabei in besonderer Weise die Problematik lösen, die sich aus der (intra-oralen) Erfassung der Topographie von Oberflächen von transluzenten, insbesondere dentalen, Objekten ergibt. Dentale Objekte sind dabei typischerweise partiell lichtdurchlässig (transluzent) und weisen daher einen vergleichsweise hohen Grad an Transluzenz und Volumenstreuung auf. Dies führt dazu, dass einfallendes Licht nicht nur von der zu erfassenden Oberfläche des transluzenten Objekts rückgestreut wird, sondern auch von Materie, die sich unter der Oberfläche befindet. Gelöst wird diese Aufgabe durch ein Verfahren zum Erfassen der Topographie der Oberfläche eines transluzenten, insbesondere dentalen, Objektes gemäß Anspruch 1 sowie mittels eines Intraoralscanners gemäß Anspruch 8.

Das Verfahren zum Erfassen der Topographie (zumindest eines Teils) der Oberfläche eines transluzenten, insbesondere dentalen, Objektes (mittels strukturierter Beleuchtung der Oberfläche) umfasst die Schritte:
- Erfassen einer ersten Teiltopographie eines ersten Teilbereichs der Oberfläche und einer zweiten Teiltopographie eines, den ersten Teilbereich zumindest teilweise überlappenden, zweiten Teilbereichs der Oberfläche, wobei das Erfassen der Teiltopographien der Teilbereiche der Oberfläche jeweils erfolgt durch
   - Projizieren eines Gesamtmessmusters auf den jeweiligen Teilbereich der Oberfläche des transluzenten Objektes mittels einer Projektionseinrichtung, wobei
      - die Projektionseinrichtung mindestens eine Lichtquelle und mindestens zwei diffraktive optische Elemente umfasst,
      - das Gesamtmessmuster mindestens zwei verschiedene Messmuster umfasst,
      - die Messmuster auf die Oberfläche projizierbar sind und jeweils eine Mehrzahl von zueinander parallelen Messlinien aufweisen,
      - den Messmustern jeweils eines der diffraktiven optischen Elemente zugeordnet ist, mittels dessen die Messlinien durch Lichtbeugung erzeugbar sind,
      - die mindestens eine Lichtquelle (30) die diffraktiven optischen Elemente (31) mit linear in einer Polarisationsrichtung (71) polarisiertem Licht beleuchtet, und zwischen der Oberfläche (1) und der Erfassungseinrichtung (12) ein linearer Polarisationsfilter (70) angeordnet ist, dessen Durchlassrichtung (72) mit der Polarisationsrichtung (71) übereinstimmt, und
   - Bereitstellen eines ersten Bildes und eines zweiten Bildes des jeweiligen Teilbereichs der Oberfläche mittels einer Erfassungseinrichtung, wobei im ersten Bild ein erstes der mindestens zwei Messmuster auf den jeweiligen Teilbereich der Oberfläche projiziert ist und im zweiten Bild ein zweites der mindestens zwei Messmuster auf den jeweiligen Teilbereich der Oberfläche projiziert ist, und
   - Erfassen der jeweiligen Teiltopographie des jeweiligen Teilbereichs der Oberfläche jeweils mittels Triangulation unter Verwendung des jeweiligen ersten Bildes und/oder des jeweiligen zweiten Bildes,
- Erfassen der Topographie der Oberfläche durch zumindest teilweises Überlagern der ersten Teiltopographie und der zweiten Teiltopographie der Oberfläche.

Der Intraoralscanner zum Erfassen der Topographie (zumindest eines Teils) der Oberfläche eines transluzenten, insbesondere dentalen, Objektes gemäß dem oben beschriebenen Verfahren umfasst eine Projektionseinrichtung, eine Erfassungseinrichtung und eine mit der Projektionseinrichtung und der Erfassungseinrichtung wirkverbundene Rechnereinrichtung,
- wobei die Projektionseinrichtung mindestens eine Lichtquelle und mindestens zwei diffraktive optische Elemente umfasst und eingerichtet ist ein Gesamtmessmuster auf Teilbereiche der Oberfläche des transluzenten Objektes zu projizieren,
   das Gesamtmessmuster mindestens zwei verschiedene Messmuster umfasst,
   die Messmuster jeweils auf die Oberfläche projizierbar sind und jeweils eine Mehrzahl von zueinander parallelen Messlinien aufweisen,
   den Messmustern jeweils eines der diffraktiven optischen Elemente zugeordnet ist, mittels denen die Messlinien durch Lichtbeugung erzeugbar sind,
   die mindestens eine Lichtquelle (30) die diffraktiven optischen Elemente (31) mit linear in einer Polarisationsrichtung (71) polarisiertem Licht beleuchtet, und
   zwischen der Oberfläche (1) und der Erfassungseinrichtung (12) ein linearer Polarisationsfilter (70) angeordnet ist, dessen Durchlassrichtung (72) mit der Polarisationsrichtung (71) übereinstimmt, und
- wobei die Erfassungseinrichtung eingerichtet ist ein erstes Bild und ein zweites Bild des jeweiligen Teilbereichs der Oberfläche bereitzustellen, und im ersten Bild ein erstes der mindestens zwei Messmuster auf den jeweiligen Teilbereich der Oberfläche projiziert ist und im zweiten Bild ein zweites der mindestens zwei Messmuster auf den jeweiligen Teilbereich der Oberfläche projiziert ist, und
- wobei die Rechnereinrichtung eingerichtet ist
   eine erste Teiltopographie des ersten Teilbereichs der Oberfläche und eine zweite Teiltopographie des zweiten Teilbereichs der Oberfläche jeweils mittels Triangulation unter Verwendung des jeweiligen ersten Bildes und/oder des jeweiligen zweiten Bildes zu erfassen, und
   die Topographie der Oberfläche durch zumindest teilweises Überlagern der ersten Teiltopographie und der zweiten Teiltopographie der Oberfläche zu erfassen.

Die vorliegende Erfindung basiert auf der überraschenden Erkenntnis, dass sich durch den Einsatz von diffraktiven optischen Elementen zur Erzeugung der Messlinien (bzw. der Messmuster) im synergetischen Zusammenspiel mit den anderen erfindungsgemäßen Verfahrensmerkmalen ein Verfahren zur Erfassung der Topographie der Oberfläche eines transluzenten, insbesondere dentalen, Objektes ermöglicht werden kann, das sich durch eine signifikant erhöhte Praxistauglichkeit auszeichnet, insbesondere realisiert durch eine hohe Erfassungsgenauigkeit, eine große Schärfentiefe, eine hohe zulässige Bewegungsgeschwindigkeit des Handstücks während des Scanvorgangs, einen hohen Grad der Miniaturisierbarkeit des Handstücks und eine sehr kostengünstige Realisierbarkeit.

Dies beruht zum einen auf der Erkenntnis, dass durch den Einsatz von diffraktiven optischen Elementen (DOE) zur Erzeugung der Messlinien und somit durch die Nutzung von Lichtbeugung zur Messmusterprojektion, auch "diffraktive" (von engl. "diffraction") Musterprojektion genannt, relativ zur eingebrachten Lichtleistung der Lichtquelle signifikant höhere Lichtintensitäten auf der Oberfläche des Objekts erreicht werden können. Ein diffraktives optisches Element stellt eine kostengünstige und kompakte Variante einer lichtbeugenden Musterprojektion zur Verfügung, wobei gemäß der vorliegenden Erfindung jedem Messmuster ein eigenes (individuelles) diffraktives optisches Element zugeordnet ist. Mittels individuell zugeordneter diffraktiver optischer Elemente können auf bauraum- und kosteneffiziente Weise mehrere unterschiedliche Messmuster projiziert werden.

Obwohl die Messmuster damit aus unterschiedlichen (zueinander beabstandeten) Projektionsursprüngen projiziert werden, ist die daraus resultierende Abschattung einzelner Messmuster (beispielsweise durch Überhänge des zu erfassenden Objektes) überraschenderweise derart gering ausgeprägt, dass selbst die hohen diesbezüglichen Anforderungen eines Intraoralscanners erfüllt werden können. Dies ist insbesondere auf die (durch das synergetische Zusammenspiel aller erfindungsgemäßen Merkmale ermöglichte) Miniaturisierung der Projektionseinrichtung zurückzuführen, wodurch die Abstände der Projektionsachsen unerwartet nah nebeneinander liegen können. Die hohen Anforderungen eines Intraoralscanners bezüglich einer geringen Abschattung rühren daher, dass die zu erfassenden dentalen Objekte oftmals Bereiche mit Überhängen oder engen Spalten aufweisen (beispielsweise Zahnzwischenräume und Kavitäten), die ebenfalls erfassbar sein müssen.

Diffraktive optische Elemente weisen dabei jeweils eine Beugungsstruktur (beugungsaktive Region) auf, die dazu eingerichtet ist für unter einem definierten Winkel einstrahlendes Licht einer definierten Wellenlänge ein definiertes Messmuster mittels Lichtbrechung zu erzeugen. Man spricht in diesem Zusammenhang auch davon, dass ein Messmuster in einem DOE hinterlegt ist. Die Beugungsstruktur ist dabei typischerweise in einer Ebene des diffraktiven optischen Elements angeordnet und wird daher auch als ebene Beugungsstruktur oder beugungsaktive Ebene/Fläche bezeichnet.

Ein Intraoralscanner erfordert eine vergleichsweise hohe räumliche Auflösung bzw. Datendichte (Messpunkte je Flächeneinheit der Oberfläche) und somit eine vergleichsweise hohe Anzahl zu projizierender Messelemente. Dabei ist es durchaus überraschend, dass diffraktive optische Elemente in dem für dentale Oberflächen vorteilhaften Wellenlängenbereich von 400-480nm (blau), auch bei einer vergleichsweise hohen Anzahl zu projizierender Messlinien eine den hohen Anforderungen eines Intraoralscanners genügende Projektionsqualität aufweisen. Denn je niedriger die Wellenlänge und je mehr zu projizierende Messlinien, desto anspruchsvoller ist die Entwicklung und Fertigung eines DOEs mit ausreichend hoher Projektionsqualität. Eine hohe Projektionsqualität zeichnet sich dabei durch eine hohe Auflösung (hier entsprechend einer geringen Messlinienbreite), einen hohen Kontrast zwischen hellen und dunklen Bereichen, eine hohe Beugungseffizienz und einen geringen Lichtanteil in der 0. Beugungsordnung aus.

Die vorliegende Erfindung basiert zudem auf der Erkenntnis, dass mittels erfindungsgemäßer Merkmale ein Verfahren zur Erfassung der Topographie der Oberfläche eines transluzenten, insbesondere dentalen Objektes in Verbindung mit den Vorteilen der diffraktiven Musterprojektion bereitgestellt werden kann, welches in der Lage ist, mehrere unterschiedliche Messmuster zu projizieren, welche ausschließlich im für dentale Objekte besonders vorteilhaften Wellenlängenbereich von 400-480nm (blau), und insbesondere monochromatisch (einfarbig) erzeugt werden können. Ein solches Verfahren und ein verfahrensgemäßer Intraoralscanner sind im Stand der Technik bisher gänzlich unbekannt; beispielsweise wird die Fähigkeit zur Projektion mehrerer unterschiedlicher Messmuster im Stand der Technik bisher ausschließlich unter Verwendung abbildender Verfahren (d.h. unter Verwendung von Lichtbrechung) realisiert. Hierzu kommen sog. räumliche Lichtmodulatoren (z.B. DLP) zum Einsatz, welche teuer und nicht gut miniaturisierbar sind. Eine wesentliche der Erfindung zugrundeliegende Erkenntnis liegt in der überraschenden Erkenntnis, dass ein erfindungsgemäßer Intraoralscanner (mit der Fähigkeit mehrere unterschiedliche Messmuster zu projizieren) deutlich kostengünstiger und besser miniaturisierbar ist als es die im Stand der Technik bekannte Lehre erlaubt.

Die Fähigkeit zur Projektion mehrerer unterschiedlicher Messmuster, welche erfindungsgemäß durch Zuordnung eines jeweiligen diffraktiven optischen Elements realisiert ist, ist besonders vorteilhaft im Kontext eines Intraoralscanners, da hiermit zur Lösung des Korrespondenzproblems eine zeitliche Kodierung der Messelemente realisiert werden kann. Im Falle eines einzigen Messmusters kommt hingegen lediglich eine räumliche Kodierung infrage. Bei einer räumlichen Kodierung wird eine charakteristische Umgebung im Bild eines Messelements zur Lösung des Korrespondenzproblems herangezogen. Da hier die zeitliche Komponente der Kodierung fehlt, muss die herangezogene Umgebung entsprechend größer sein damit das Korrespondenzproblems eindeutig gelöst werden kann. Dies limitiert jedoch wiederum die minimal auflösbare Sequenz bzw. Umgebung von Messelementen, zudem sinkt die Robustheit gegenüber Störeinflüssen. In der Praxis wird versucht diesen Effekt zu mindern indem eine Farbkodierung eingeführt wird. Hierdurch wird jedoch der für dentale Oberflächen besonders vorteilhafte Wellenlängenbereich von 400-480nm verlassen, was die Leistungsfähigkeit eines entsprechenden Verfahrens reduziert. Im Gegensatz dazu kann bei der Projektion mehrerer unterschiedlicher Messmuster eine Kombination aus zeitlicher und räumlicher Kodierung (hybride Kodierung) realisiert werden, wodurch eine kleine minimal auflösbare Sequenz bei zugleich höherer Robustheit gegenüber Störeinflüssen erzielt wird. In anderen Worten erlaubt ein erfindungsgemäßes Verfahren und ein erfindungsgemäßer Intraoralscanner die Verbindung der Vorteile diffraktiver Musterprojektion mit der Fähigkeit zur Projektion mehrerer unterschiedlicher Messmuster in synergetischer Weise.

Im Stand der Technik bekannte Verfahren und Vorrichtungen zur Erfassung der Topographie der Oberfläche eines transluzenten, insbesondere dentalen, Objektes die in der Lage sind mehrere Messmuster zu projizieren, verwenden Projektionsverfahren nach dem Prinzip der Lichtbrechung, d.h. die Projektion der Messmuster (bzw. der Messlinien) erfolgt mittels einer abbildenden Optik. Die abbildende Optik projiziert den Inhalt eines statischen Dias oder eines dynamischen Bildgenerators, auch räumlicher Lichtmodulator genannt (z.B. ein Mikrospiegelarray oder ein LCD-Element), auf die Objektoberfläche. Im Fall von strukturierter Beleuchtung, welche Gegenstand der vorliegenden Erfindung ist, sind diese abbildenden Projektionsmethoden stets mit erheblichen Lichtverlusten behaftet. Dies liegt daran, dass eine strukturierte Beleuchtung per Definition nicht gleichförmig ist, und daher örtliche Variationen von Lichtintensität auf der Oberfläche des Objektes beinhaltet. Die örtliche Reduktion von Lichtintensität gegenüber einfallendem Licht auf einem statischen Dia oder einem dynamischen Bildgenerator wird abhängig vom Funktionsprinzip entweder durch Absorption oder durch Reflexion von Licht realisiert. Dieses absorbierte oder reflektierte Licht wurde von der Lichtquelle erzeugt, erreicht aber nicht die Objektoberfläche und ist somit der Lichteffizienz abträglich.

Wird die Musterprojektion hingegen mittels Lichtbeugung realisiert, wirken weder Absorption noch Reflexion bei der Erzeugung der strukturierten Beleuchtung. Stattdessen wird die örtliche Variation der Lichtintensität auf der Oberfläche durch gezielte Umlenkung des einfallenden Lichtstrahls auf jene (den Messlinien zugeordnete) Abschnitte der Oberfläche gelenkt, die heller erscheinen sollen, und von Bereichen abgelenkt, die dunkler erscheinen sollen. Im Resultat ist die Erzeugung der strukturierten Beleuchtung durch Lichtbeugung damit deutlich lichteffizienter.

Die Steigerung der Lichteffizienz soll im Folgenden anhand eines beispielhaften Streifenmusters illustriert werden, welches Streifen maximaler Helligkeit und Streifen minimaler Helligkeit enthält, wobei 50% der Gesamtfläche des Messmusters die maximale Helligkeit aufweisen und 50% die minimale Helligkeit aufweisen. Im Falle einer im Stand der Technik für Intraoralscanner bekannten abbildenden Projektion wird das Streifenmuster durch einen räumlichen Lichtmodulator erzeugt, der z.B. ein statisches Dia, oder im dynamischen Fall ein Mikrospiegelarray oder ein LCD sein kann. Der räumliche Lichtmodulator wird von einer Lichtquelle flächig beleuchtet und erzeugt die hellen und dunklen Bereiche des Musters mittels Absorption/Transmission oder Reflektion. Unter Vernachlässigung aller weiteren optischen Verluste liegt hier die maximal erreichbare Lichteffizienz bei 50%, da nur die Hälfte der Fläche des Lichtmodulators Streifen maximaler Helligkeit entspricht, und auf der verbleibenden Fläche einfallendes Licht innerhalb der Projektionseinrichtung absorbiert wird. Im Fall einer Projektion mittels Lichtbeugung kann das Streifenmuster mittels eines diffraktiven optischen Elements (DOE) erzeugt werden. Ein einfallender Lichtstrahl trifft auf das DOE, welches diesen entsprechend der Messmusterdefinition in die entsprechenden auszuleuchtenden Bereiche umlenkt. Dabei entstehende interne Verluste des DOEs, beispielsweise die sog. Beugungseffizienz, liegen typischerweise im einstelligen Prozentbereich. Werden die geringfügigen internen Verluste vernachlässigt, erfolgt die Messmustererzeugung ohne Absorption eingebrachten Lichts. Bei gleichem Lichteintrag resultiert somit eine doppelte Helligkeit bzw. (Licht-)Intensität der Streifenmuster im Vergleich zur abbildenden Projektion. Dadurch kann eine Erhöhung der Lichtintensität der beleuchteten Abschnitte der Oberfläche ermöglicht und gleichzeitig der benötigte Lichteintrag (durch die Lichtquelle) und damit einhergehend die Größe sowie der Energiebedarf der Lichtquelle reduziert werden. Die offenbarte erfindungsgemäße Lehre ermöglicht somit eine (im Vergleich zum Stand der Technik) wesentliche Verkleinerung (Miniaturisierung) von Projektionseinrichtung bzw. Handstück und Intraoralscanner.

Ein Intraoralscanner sollte ein möglichst kompaktes Handstück aufweisen, um die zu erfassenden Bereiche der Mundhöhle möglichst gut erreichen zu können. Des Weiteren ist ein möglichst kompaktes Handstück vorteilhaft, da es die Handhabung und insbesondere Führung des Handstücks während des Scanvorgangs durch den Bediener erleichtert. Ebenfalls lässt sich durch ein kompaktes Handstück ein besonders ansprechendes Design realisieren, was für die Vermarktbarkeit vorteilhaft sein kann.

Durch die (mittels der erfinderischen Lehre ermöglichte) Miniaturisierung der Projektionseinrichtung kann diese gemeinsam mit der Erfassungseinrichtung in der Scanspitze des Handgeräts (des Intraoralscanners) angeordnet werden, wodurch sich ein vorteilhaft schlankes Gehäusedesign realisieren lässt. Darüber hinaus lässt sich dadurch die zurückzulegende Weglänge des Lichtes (von der Lichtquelle zur Oberfläche sowie von der Oberfläche zur Erfassungseinrichtung) reduzieren, was der Projektions- und Erfassungsgenauigkeit zuträglich sein kann, da sich z.B. der genauigkeitsschädliche Einfluss einer im Betrieb auftretenden, strukturell-mechanischen Verwindung des Handgeräts auf diese Weise reduzieren lässt.

Herkömmliche Projektionseinrichtungen, wie beispielsweise in WO 2018073824 A1, WO 2020102658 A2 und WO 2019032923 A2 beschrieben, können aktuell nicht soweit miniaturisiert werden, dass sie in der Scanspitze montiert werden können. Aufgrund dessen ist eine Anordnung von Erfassungseinrichtung und Projektionseinrichtung im hinteren Teil des Handstücks notwendig, was dort eine Auswölbung des Gehäuses erfordert. Durch eine Projektion mittels Lichtbeugung lässt sich im Vergleich zu anderen bekannten Verfahren die Projektionseinrichtung auf sehr kleine Abmessungen miniaturisieren, was eine Montage weit vorne in der Scanspitze erlaubt. Eine Auswölbung des hinteren Teils des Handstücks ist dann nicht notwendig, wodurch ein deutlich ergonomischeres und ansprechenderes Design des Handstücks ermöglicht wird.

Eine Musterprojektion mittels Lichtbeugung durch DOE ist somit im Kontext der intra-oralen Erfassung einer Topographie, also im Kontext eines Intraoralscanners, vorteilhaft, da hierdurch ein kompakter, licht-, energie- und kosteneffizienter Intraoralscanner bereitgestellt werden kann. Der erfindungsgemäße Intraoralscanner (bzw. das Handstück) ist mit anderen Worten prinzipbedingt kompakter realisierbar, da eine Musterprojektion mittels Beugung kein (relativ großvolumiges) abbildendes Projektionsobjektiv und keinen räumlichen Lichtmodulator benötigt.

Des Weiteren beruht die vorliegende Erfindung auf der Erkenntnis, dass die (durch den Einsatz von diffraktiven optischen Elementen zur Erzeugung der Messlinien ermöglichte) höhere Lichtintensität der beleuchteten Abschnitte der Oberfläche (bzw. der Messelemente/Messlinien) genutzt werden kann, um die Erfassungsgenauigkeit der Topographie der Oberfläche der transluzenten, insbesondere dentalen, Objekte zu erhöhen. Dentale Objekte weisen wie oben bereits erwähnt einen vergleichsweise hohen Grad an Transluzenz und Volumenstreuung auf, was dazu führt, dass einfallendes Licht nicht nur von der zu erfassenden äußeren Oberfläche des Objekts reflektiert (rückgestreut) wird, sondern auch von Materie, die sich unter der Oberfläche befindet. Dieser Effekt führt nachteilig dazu, dass eine auf die Oberfläche eines transluzenten Objekts projizierte Messlinie an Kontrast verliert und die Messlinie somit dunkler, kontrastarm und unscharf erscheint (ähnlich einer Defokussierung). Die Lage der dunklen, kontrastarmen bzw. unscharfen Messlinie kann in den von der Erfassungseinrichtung bereitgestellten Bildern nur mit reduzierter Genauigkeit lokalisiert werden, was sich nachteilig auf die Erfassungsgenauigkeit der Topographie der Oberfläche auswirkt. Durch die Erhöhung der Lichtintensität der Messlinie (bzw. des der Messlinie zugeordneten Abschnitts auf der Oberfläche) kann diesem Effekt entgegengewirkt werden, wodurch eine vergleichsweise hohe Erfassungsgenauigkeit trotz Transluzenz des Objekts erzielt werden kann. Die Erhöhung der Lichtintensität kann darüber hinaus eine Erhöhung der Schärfentiefe ermöglichen, welche den nutzbaren Arbeitsbereich der 3D-Erfassung vergrößert. Der Arbeitsbereich der 3D-Erfassung ist derjenige Bereich, innerhalb dem eine Oberfläche angeordnet sein muss, damit deren Topographie erfasst werden kann. Die Erhöhung der Schärfentiefe wird durch eine höhere Lichtintensität in den Messlinien ermöglicht, welche bei gleicher Intensität der Erfassung eine kleinere Apertur (höhere Blendenzahl) der Erfassungseinrichtung erlaubt.

Ferner kann durch die Erhöhung der Lichtintensität der den Messlinien zugeordneten Abschnitte der Oberfläche eine Erhöhung der zulässigen Bewegungsgeschwindigkeit ermöglicht werden, da die zur Bereitstellung der Bilder benötigte Belichtungsdauer (Integrationszeit) reduziert werden kann. Die zulässige Bewegungsgeschwindigkeit ist jene Maximalgeschwindigkeit, mit der die Erfassungseinrichtung bei der Erfassung der Topographie über die zu erfassende Oberfläche geführt werden kann, ohne die Genauigkeitsanforderungen der Topographieerfassung zu verletzen (beispielsweise aufgrund von Bewegungsunschärfe).

Der Einsatz von diffraktiven optischen Elementen zur Erzeugung von mehreren unterschiedlichen (Messelemente, insbesondere Messlinien, umfassenden) Messmustern stellt dabei eine Abkehr von den bisher im Stand der Technik verfolgten Verfahren zur Erfassung von Topographien von Oberflächen von transluzenten, insbesondere dentalen, Objekten dar, denen gemein ist, dass zur Erzeugung mehrerer unterschiedlicher (Messelemente, insbesondere Messlinien, umfassender) Messmuster Methoden der Lichtbrechung verwendet werden.

Diffraktive optische Elemente werden jeweils im Hinblick auf Licht einer spezifischen Designwellenlänge definiert und hergestellt, um ein (hinterlegtes) Designmessmuster zu projizieren. Nur bei Verwendung exakt dieser Designwellenlänge wird das hinterlegte Designmessmuster projiziert, da die Erzeugung von Messlinien bei diffraktiven optischen Elementen auf dem wellenlängenabhängigen Phänomen der Lichtbeugung beruht. Wird das diffraktive optische Element hingegen mit Licht verwendet, welches nicht exakt seiner Designwellenlänge entspricht, ist das resultierende Messmuster gegenüber dem Designmessmuster verzerrt, wobei sich derartige (Messmuster-)Verzerrungen z. B. durch eine Veränderung des Abstandes zwischen benachbarten Messlinien und/oder eine Krümmung der einzelnen Messlinien zeitigen können.

Im praktischen Betrieb einer Lichtquelle ist stets mit geringfügen Abweichungen des emittierten Lichtspektrums von der Spezifikation zu rechnen (spektrale Variation), die auf nicht konstante Betriebsbedingungen (z. B. Temperatur der Lichtquelle) und/oder auf eine fertigungsbedingte Streuung zurückzuführen sind. Diese Abweichungen können umso stärker ausfallen, wenn die Lichtquelle in einer Projektionseinrichtung zum Einsatz kommt, die als Teil eines mobilen Handstücks bewegt wird, da während der Anwendung verschiedene Betriebszustände durchlaufen werden und das mobile Handstücks variierenden Umgebungsbedingungen ausgesetzt ist. Diese Abweichungen der Wellenlänge führen dazu, dass beim Einsatz eines diffraktiven optischen Elements dieses (zumindest teilweise) außerhalb seiner Designwellenlänge verwendet wird und somit das resultierende Messmuster oben erwähnte Verzerrungen gegenüber dem Designmessmuster aufweist (Messmusterverzerrung), was sich nachteilig auf die erzielbare Genauigkeit der Projektion auf die Oberfläche auswirkt (wellenlängenabhängige Projektionsungenauigkeit) .

Aus dem Stand der Technik bekannte abbildende Messmuster-Projektionsmethoden (die im Zusammenhang mit der Erfassung der Topographie von transluzenten, insbesondere dentalen, Oberflächen eingesetzt werden) basieren hingegen auf dem Phänomen der Lichtbrechung. Durch Abweichungen der Wellenlänge des emittierten Lichts hervorgerufene Messmusterverzerrungen (z.B. durch sog. chromatische Aberration) können hier durch entsprechende Auslegung der abbildenden Optik (z.B. durch achromatische Linsen) praktisch eliminiert werden.

Überraschenderweise kann - trotz dieser DOE-immanenten wellenlängenabhängigen Projektionsungenauigkeit - in einem erfindungsgemäßen Intraoralscanner die geforderte sehr hohe Genauigkeit bei der Erfassung der Topographie der Oberfläche erzielt werden. Es hat sich gezeigt, dass der Nachteil der wellenlängenabhängigen Projektionsungenauigkeit des DOE mehr als aufgewogen wird durch die erheblichen Vorteile, die sich in Umsetzung der vorliegenden Erfindung erzielen lassen - insbesondere im Hinblick auf die höhere erzielbare Lichtintensität der Messlinien und die damit ermöglichte höhere Erfassungsgenauigkeit. Somit kann durch den Einsatz von diffraktiven optischen Elementen (zur Erzeugung von Messlinien) - insbesondere bei der Erfassung der Topographie der Oberfläche eines transluzenten Objektes (bei dem wie oben beschrieben durch die Volumenstreuung eine Kontrastabschwächung der Messlinie hervorgerufen werden kann) - insgesamt eine unerwartet hohe Genauigkeit bei der Erfassung der Topographie erzielt werden.

Darüber hinaus basiert die vorliegende Erfindung auf der Erkenntnis, dass sich die Genauigkeit der Erfassung der Topographie durch weitere Maßnahmen noch weiter erhöhen lässt:
Zum einen dadurch, dass gemäß einer vorteilhaften Ausgestaltung der Erfindung die diffraktiven optischen Elemente auf einem gemeinsamen (einteiligen) (DOE-)Substrat angeordnet sind, wobei insbesondere die Beugungsstrukturen (beugungsaktive Flächen) der diffraktiven optischen Elemente in einer gemeinsamen Ebene angeordnet sind. Damit kann in vorteilhafter Weise die Notwendigkeit einer Justage der einzelnen diffraktiven optischen Elemente relativ zueinander (oder Einhaltung enger Fertigungstoleranzen) zur Erzielung einer aufeinander abgestimmten Messmusterorientierung und Lage eliminiert werden. Durch die einteilige Ausführung der diffraktiven optischen Elemente kann erreicht werden, dass die ebenen Beugungsstrukturen in einer gemeinsamen Ebene liegen, die der Oberfläche des gemeinsamen Substrats entspricht. Dadurch können in vorteilhafter Weise gleiche Projektionsabstände der Messmuster und insbesondere eine exakt gleiche Skalierung (d.h. projizierte Größe) der Messmuster auf der Oberfläche erreicht werden. Des Weiteren werden durch die einteilige Ausführung Kosten und Komplexität der DOE-Fertigung reduziert, da weniger Schnitt- und Handhabungsaufwand entsteht als bei mehreren separaten DOEs. Ferner können somit Projektionsungenauigkeiten, die auf eine fehlerhafte Ausrichtung der diffraktiven optischen Elemente zueinander zurückzuführen sind, ausgeschlossen oder zumindest reduziert werden.
Zum anderen kann der Projektionsqualität und der Kosteneffizienz zugutekommen, dass gemäß einer weiteren vorteilhaften Ausgestaltung der Erfindung die Projektionseinrichtung eine erste Vorrichtung zur Justage einer Lage mindestens einer Projektionsachse und/oder eine zweite Vorrichtung zur Justage umfasst, wobei mittels der zweiten Vorrichtung zur Justage
   - ein Abstand zwischen einem der diffraktiven optischen Elemente und der mindestens einen Lichtquelle änderbar ist oder
   - ein Abstand zwischen einer Linse und der mindestens einen Lichtquelle änderbar ist. Die Linse kann dabei insbesondere zwischen der mindestens einen Lichtquelle und dem zugeordneten diffraktiven optischen Element angeordnet sein.

Damit kann eine Justage der Lage der Projektionsachsen (optische Achsen) und/oder der Fokusabstände der (Laser-)Lichtquellen erreicht werden, welche vorteilhaft die Kosteneffizienz einer Fertigung aufgrund geringerer Anforderungen an Fertigungstoleranzen steigern kann.

Es kann insbesondere zweckmäßig sein, die optischen Achsen bzw. die Projektionsachsen der Lichtquellen in eine gemeinsame Projektionsachsenebene zu bringen. Hierzu können einerseits enge Fertigungstoleranzen hinsichtlich der Lichtquellen, der Lichtquellenoptiken und der Mechanik der Projektionseinrichtung verwendet werden. Im Sinne einer höheren Kosteneffizienz der Fertigung ist es jedoch vorteilhaft, hierfür in der Projektionseinrichtung eine (für jede Lichtquelle individuell einstellbare) erste Vorrichtung zur Justage der Lagen der Projektionsachsen vorzusehen, um insbesondere zu erreichen, dass alle Projektionsachsen in einer gemeinsamen Ebene angeordnet sind. Hierzu kann die erste Vorrichtung zur Justage beispielsweise derart eingerichtet sein, dass mittels Schraubvorrichtung die translatorische und/oder rotatorische Ausrichtung (Lagerung) einer jeden Lichtquelle bezogen auf das zugeordnete diffraktive optische Element (in einem gewissem Umfang) individuell verändert werden kann.

Ferner wird die Erfassungsgenauigkeit noch weiter erhöht, indem erfindungsgemäß die mindestens eine Lichtquelle die diffraktiven optischen Elemente mit linear in einer Polarisationsrichtung polarisiertem Licht beleuchtet, und zwischen der (zu erfassenden) Oberfläche und der Erfassungseinrichtung ein linearer Polarisationsfilter angeordnet ist, dessen Durchlassrichtung mit der Polarisationsrichtung übereinstimmt. Auf diese Weise kann im Kontext eines Intraoralscanners die natürliche Polarisation von Laserlicht genutzt werden, um in Kombination mit einem Polarisationsfilter zwischen Objektoberfläche und Erfassungseinrichtung eine lichteffiziente Unterdrückung von Volumenstreuung (transluzenter) dentaler Oberflächen zu realisieren.

Das auf die Oberfläche projizierte Messmuster (bzw. die strukturierte Beleuchtung) wird im Falle typischer transluzenter, dentaler Objekte, wie beispielsweise Zahnschmelz, Zahnbein oder Zahnfleisch, teilweise von der Oberfläche des dentalen Objekts rückgestreut. Ein signifikanter Teil des einfallenden Lichts wird jedoch auch von darunter (unter der Oberfläche) liegender Materie rückgestreut, welche durch Volumenstreuung beleuchtet wurde. Der von unter der Oberfläche liegender Materie rückgestreute Teil des Lichts führt zu einem Kontrastverlust und einer Verzerrung der von der Erfassungseinrichtung erfassten strukturierten Beleuchtung. Somit ändert sich durch die Volumenstreuung bei transluzenten Objekten der detektierte Ort der Musterprojektion (Messelemente) durch eine geringfügige Verschiebung des Schwerpunkts der Rückstreuung unter die Oberfläche. Sowohl der reduzierte Kontrast als auch die Verschiebung führen zu Fehlern bei der Erfassung der dentalen Oberfläche, was nachteilig für das Signal-Rauschverhältnis und die Genauigkeit der 3D-Erfassung sein kann.

Um den Anteil des nicht von der Oberfläche rückgestreuten Lichts zu reduzieren, ist ein Polarisationsfilter zwischen Objekt und Erfassungseinrichtung eingerichtet. Hierbei wird die Eigenschaft der Oberflächen von dentalen Objekten genutzt, den Polarisationszustand einfallenden Lichts bei der direkten Rückstreuung an der Oberfläche überwiegend beizubehalten. Der Polarisationszustand des von Materie unter der Oberfläche rückgestreuten Lichtanteils wird hingegen randomisiert, d.h. er behält nicht den Polarisationszustand des einfallenden Lichts bei, sondern nimmt einen durchmischten Zustand an. Mit anderen Worten: Der direkt von der Oberfläche rückgestreute Lichtanteil behält die Polarisationsrichtung der Beleuchtung überwiegend bei, wohingegen der unter der Objektoberfläche rückgestreute Teil einen durchmischten, nahezu gleichverteilten Polarisationszustand aufweist. Durch die Verwendung von polarisiertem Licht in Verbindung mit einem Polarisationsfilter zwischen der (Objekt-)Oberfläche und der Erfassungseinrichtung kann der relative Anteil des von der Oberfläche rückgestreuten Lichts vorteilhaft erhöht werden. Hierdurch kann das Signal-Rauschverhältnis der 3D-Erfassung und deren Erfassungsgenauigkeit verbessert werden.

Zahlreiche im Stand der Technik bekannte Projektionseinrichtungen verwenden Lichtquellen mit überwiegend durchmischtem Polarisationszustand, beispielsweise LEDs, oder Laser deren Polarisationszustand durchmischt wurde, beispielsweise durch optische Elemente zur Erzeugung einer flächigen und intensitätshomogen Ausleuchtung, zur Lichtmischung oder zur SpeckleReduktion. Da in diesen Fällen das auf die zu erfassende Oberfläche gestrahlte Licht unpolarisiert wäre, ist zur Herstellung einer polarisierten Projektion ein Polarisationsfilter zwischen der Lichtquelle und der (Objekt-)Oberfläche erforderlich. Ein derartiger Polarisationsfilter führt bei unpolarisiertem Licht typischerweise zu einer Reduktion des nutzbaren Lichts um mindestens 50%. Die vorliegende Erfindung hingegen erlaubt es, die bei Laserdioden üblicherweise auftretende natürliche Polarisation direkt zu nutzen und somit einen Polarisationsfilter zwischen Lichtquelle und Objekt, und die damit einhergehenden Verluste zu vermeiden. Hierdurch wird im Resultat vorteilhaft eine höhere Lichteffizienz und höhere realisierbare Lichtintensität auf der Objektoberfläche ermöglicht. Zusätzlich kann somit der zwischen Lichtquelle und (Objekt-)Oberfläche angeordnete Polarisationsfilter als optisches Bauteil eingespart werden.

Die vorliegende Erfindung ermöglicht somit eine besonders lichteffiziente und kostengünstige Nutzung der Vorteile, die mit dem Einsatz von polarisiertem Licht einhergehen können, allein durch den Einsatz eines Polarisationsfilters zwischen (Objekt-)Oberfläche und Erfassungseinrichtung und einer entsprechenden Ausrichtung der Lichtquellen anhand ihrer natürlichen Polarisationsrichtung.

Der Polarisationsfilter kann dabei grundsätzlich als transmissiver oder reflexiver Polarisationsfilter ausgeführt sein. Die Polarisationsrichtung eines transmissiven Polarisationsfilters ist diejenige Polarisationsrichtung, die der Polarisationsfilter überwiegend transmittiert, im Falle eines reflexiven Polarisationsfilters ist es diejenige Polarisationsrichtung, die der Polarisationsfilter überwiegend reflektiert. Die genannten Vorteile können dabei sowohl unter Einsatz von linearer Polarisation als auch unter Einsatz zirkularer Polarisation erreicht werden (vorausgesetzt die eingesetzten Lichtquellen weisen die entsprechende Polarisation auf).

Gemäß einer besonders vorteilhaften Ausgestaltung der Erfindung ist der Polarisationsfilter nur im Emissionsspektrum der mindestens einen (Laser-)Lichtquelle polarisierend wirksam und im verbleibenden Spektrum neutral. Die Unterdrückung der Volumenstreuung dentaler Oberflächen kann somit spektralselektiv erfolgen. Dies ist beispielsweise vorteilhaft, wenn eine 3D-Erfassung (dreidimensionale Erfassung der Topographie einer Oberfläche) in einem anderen Spektralbereich erfolgt als eine (gleichzeitig stattfindende) Farbbilderfassung (bei der nicht die Topographie einer Oberfläche, sondern deren Farbe erfasst wird). Die Unterdrückung von Volumenstreuung transluzenter, dentaler Oberflächen kann bei einer Farbbilderfassung weniger relevant als bei einer 3D-Erfassung sein, da hier meist kein Messmuster projiziert wird, sondern eine Beleuchtung homogen verteilter Intensität. Zugleich kann eine Beleuchtung der Objektoberfläche zur Farbbilderfassung kostengünstig und mit geringer technischer Komplexität mittels LEDs erzeugt werden, welche oft keine signifikante natürliche Polarisation aufweisen, anhand derer sie in Durchlassrichtung zum Polarisationsfilter ausgerichtet werden könnten. Ein signifikanter Teil des erzeugten unpolarisierten Lichts würde deshalb (durch einen nicht-spektralselektiven Polarisationsfilter) für die Aufnahme eines Farbbildes verloren gehen. Ein spektralselektiver Polarisationsfilter kann somit beispielsweise vorteilhaft die Lichteffizienz einer Farbbildaufnahme erhöhen, wobei die Vorteile einer Unterdrückung der Volumenstreuung dentaler Oberflächen für die 3D-Erfassung erhalten bleiben.

Zusätzlich kann die Erfassungsgenauigkeit eines auf die Oberfläche projizierten Messmusters erhöht werden, indem gemäß einer weiteren vorteilhaften Ausgestaltung der Erfindung das Projizieren des Gesamtmessmusters auf den jeweiligen Teilbereich der Oberfläche des transluzenten Objektes ein Reduzieren von Speckle mittels einer Vorrichtung zur Reduktion von Speckle umfasst, optional durch ein, insbesondere translatorisches, Bewegen mindestens eines der diffraktiven optischen Elemente während des Projizierens des Gesamtmessmusters (auf einen der Teilbereiche der Oberfläche des transluzenten Objektes mittels einer Projektionseinrichtung). Hierzu kann die Projektionseinrichtung eine Vorrichtung zur Reduktion von Speckle umfassen, wobei optional mindestens eines der diffraktiven optischen Elemente, insbesondere translatorisch, (während des Projizierens des Gesamtmessmusters) bewegbar sein kann.

Eine Reduktion von Speckle ist vorteilhaft zur Verbesserung des Signal-Rauschverhältnisses bei der 3D-Erfassung mittels des Verfahrens der strukturierten Beleuchtung. Speckle, in der Optik auch als Lichtgranulation oder Lasergranulation bekannt, entsteht bei der Erfassung optisch rauer Oberflächen unter Verwendung von kohärenter Beleuchtung, welche beispielsweise von Laserlicht bereitgestellt wird. Im Stand der Technik sind Verfahren zur Reduktion von Speckle bekannt; beispielsweise kann eine Reduktion von Speckle durch eine zeitliche Mittelung verschiedener Specklemuster (oder Speckle-Zustände) innerhalb der Belichtungszeit der Erfassungseinrichtung (auch Integrationszeit genannt) erreicht werden.

Über den bekannten Stand der Technik hinausgehend kann bei einer Messmusterprojektion mittels Lichtbeugung unter Verwendung diffraktiver optischer Elemente (DOEs) durch ein, insbesondere translatorisches, Bewegen des diffraktiven optischen Elements Speckle reduziert werden, da das Specklemuster durch das Bewegen des diffraktiven optischen Elements (zeitlich und/oder örtlich) variiert wird. Ein Bewegen eines diffraktiven optischen Elements bezeichnet dabei in diesem Zusammenhang ein maschinell betätigtes Bewegen des diffraktiven optischen Elements bzw. ein Ändern der Position oder Lage des diffraktiven optischen Elements.

Diese Methode zur Reduktion von Speckle kann dabei auch unabhängig von dem erfindungsgemäßen Verfahren zum Erfassen der Topographie der Oberfläche eines transluzenten, insbesondere dentalen, Objektes (und unabhängig von dem erfindungsgemäßen Intraoralscanner) eingesetzt werden.

Ein Verfahren zur specklereduzierten Messmusterprojektion und Erfassung, wobei das Verfahren nicht Teil der Erfindung ist, umfasst die Schritte:
- Bestrahlen eines diffraktiven optischen Elements, in dem ein Messmuster hinterlegt ist, mit einer Lichtquelle, wobei die Lichtquelle insbesondere als Laserlichtquelle ausgeführt ist,
- Projizieren des Messmusters auf eine Oberfläche,
- Erfassen eines Bildes des projizierten Messmusters auf der Oberfläche mittels einer Erfassungseinrichtung über die Dauer einer Belichtungszeit, und
- Bewegen, insbesondere translatorisches Bewegen, des diffraktiven optischen Elements während der Belichtungszeit.

Die im Folgenden ausgeführten, im Zusammenhang mit einer SpeckleReduktion stehenden vorteilhaften Ausgestaltungen können in Verbindung mit dem erfindungsgemäßen Verfahren zum Erfassen der Topographie eines transluzenten, insbesondere dentalen, Objektes, dem erfindungsgemäßen Intraoralscanner und/oder mit dem (eine eigenständige Erfindung darstellenden) Verfahren zur specklereduzierten Messmusterprojektion und Erfassung eingesetzt werden.

Gemäß einer vorteilhaften Ausgestaltung kann das diffraktive optische Element in der Ebene seiner Beugungsstruktur (beugungsaktiven Fläche) bewegbar sein.

Gemäß einer vorteilhaften Ausgestaltung kann das im diffraktiven optischen Element hinterlegte Messmuster Messelemente umfassen, die als zueinander parallelen Messlinien ausgebildet sind, und das diffraktive optische Element in der Ebene seiner Beugungsstruktur (beugungsaktiven Fläche), und insbesondere linear translatorisch in Richtung der Messlinien bewegbar sein. Diese Ausgestaltung führt zu einer durch die Bewegung besonders unverfälschten Wiedergabe der Messlinien, da diese nur in Richtung der Messlinien und nicht quer dazu bewegt werden.

Gemäß einer weiteren vorteilhaften Ausgestaltung kann das Bewegen linear oszillierend erfolgen (lineare Oszillation). Die lineare Oszillation kann durch einen linearen Antrieb (z.B. Linearmotor oder Linearaktuator) oder einen linearen Resonator erzeugt werden. Ein linearer Resonator kann z.B. mittels einer Vibrationsquelle (z.B. rotatorischer oder linearer Unwucht- oder Vibrationsmotor) in Verbindung mit einer Feder oder einem Federsystem realisiert werden. Ebenso kann ein linearer Resonator durch eine elektromagnetische oder sonstige steuerbare Anregung eines Feder-Masse-Systems realisiert werden.

Gemäß einer weiteren vorteilhaften Ausgestaltung entspricht die Periode der Oszillation (Kehrwert der Oszillationsfrequenz) höchstens der Belichtungszeit (für die Erfassung eines Bildes) und/oder beträgt die Amplitude der Oszillation mindestens den halben Strahldurchmesser (in Bezug auf FWHM - engl. "Full-Width-Half-Maximum") des einfallenden Lichtstrahls.

Gemäß einer weiteren besonders vorteilhaften Ausgestaltung kann eine durch die Oszillation in das Handstück eines Intraoralscanners eingebrachte Kraft durch eine Ausgleichskraft kompensiert werden. Die Ausgleichskraft kann beispielsweise durch eine Oszillation einer zweiten Masse bei gleicher Frequenz und 180° Phasenversatz erreicht werden.

Gemäß einer weiteren vorteilhaften Ausgestaltung kann die Projektionseinrichtung mindestens eine als Laserlichtquelle ausgeführte Lichtquelle umfassen, die in einer Dimension (Richtung) einzelmodig (engl. single-mode) und in einer zweiten Dimension (Richtung) multimodig (engl. multi-mode) ist, wobei die zweite (multimodige) Dimension parallel oder senkrecht zur Richtung der Messlinien ausgerichtet ist. Ein solcher Aufbau kann durch eine kürzere Kohärenzlänge der Laserlichtquelle den Specklekontrast wirksam reduzieren.

Gemäß einer weiteren vorteilhaften Ausgestaltung kann die Projektionseinrichtung mindestens eine als Laserlichtquelle ausgeführte Lichtquelle umfassen, deren Versorgungsstrom mit einer Frequenz im Bereich von 1-1000 MHz moduliert ist. Eine solche hochfrequente Modulation kann Laser-Mode-Hopping eliminieren und die Kohärenzlänge des emittierten Lichts verkürzen. Die Elimination von Laser-Mode-Hopping führt zu einer stabileren spektralen Emission des Lasers. Da eine Musterprojektion mittels Lichtbeugung wellenlängenabhängig ist, kann dadurch die zeitliche Stabilität der Projektion und letztlich (in der vorliegenden erfindungsgemäßen Anwendung) die Erfassungsgenauigkeit der Oberflächentopographie verbessert werden. Die ebenfalls mit der Modulation einhergehende Verkürzung der Kohärenzlänge des emittierten Lichts kann zusätzlich zu einer Specklereduktion führen, welche zusätzlich vorteilhaft für die Genauigkeit der Topographieerfassung ist.

Darüber hinaus kann die Genauigkeit der Erfassung der Topographie der Oberfläche dadurch erhöht werden, dass gemäß einer weiteren vorteilhaften Ausgestaltung der Erfindung die Messlinien mittels algebraischer Flächen kalibriert sind und optional die Triangulation unter Verwendung dieser algebraischen Flächen erfolgt. Algebraische Flächen können dreidimensionale Ebenen oder durch Polynome höheren Grades darstellbare Flächen sein, beispielsweise quadratische oder kubische Flächen. Insbesondere können auch konische Flächen zur Kalibrierung der Messlinien verwendet werden. Die Triangulation kann dann optional durch die Bildung von Schnittpunkten zwischen Sichtlinien der Erfassungseinrichtung und den kalibrierten algebraischen Flächen erfolgen.

Wie bereits erwähnt wird ein diffraktives optisches Element bzw. das darin (durch die Ausgestaltung der Beugungsstruktur) hinterlegte (Design-)Messmuster bezogen auf eine sog. Designwellenlänge definiert und hergestellt. Entspricht das einfallende Licht exakt der Designwellenlänge, wird das Messmuster exakt der Definition entsprechend wiedergegeben. In der Praxis lässt sich ein Beleuchtungsspektrum, das exakt der Designwellenlänge entspricht, jedoch kaum oder nur mit großem Aufwand realisieren. Gängige Lichtquellen weisen eine fertigungsbedingte spektrale Variation auf, und das Emissionsspektrum ist zudem abhängig von anderen Parametern, wie z.B. der Betriebstemperatur. Zudem spielen andere Faktoren bei der Messmusterwiedergabe eine Rolle, beispielsweise die Richtung des in das DOE einfallenden Lichts (Projektionsachse), da Abweichungen der Beleuchtungsrichtung ebenfalls zu einer Abweichung des mittels Lichtbeugung erzeugten Musters führen. Da in der Praxis selten exakt die Designbedingungen bezogen auf die Wellenlänge und die Beleuchtungsrichtung vorliegen, ist mit einer Abweichung der Messmusterprojektion von der ursprünglichen Definition auszugehen. Sind für ein DOE unter Designbedingungen gerade Messlinien definiert, spannen diese bei ideal designgemäßen Bedingungen (im beleuchteten Zustand) jeweils eine Projektionsfläche auf, die mittels einer Ebenengleichung beschrieben werden kann (Projektionsebene). Bei in der Praxis üblichen, von den Designbedingungen abweichenden Bedingungen hingegen sind die auf die (Objekt-)Oberfläche projizierten Messlinien nicht exakt gerade, sondern gekrümmt, sodass sich die von den Messlinien aufgespannten Projektionsflächen durch algebraische Flächen höheren Grades mit einer höheren Genauigkeit beschreiben lassen (als dies mit Projektionsebenen möglich wäre).

Damit führen - aufgrund der in der Praxis auftretenden Abweichungen von den Designbedingungen - algebraische Flächen höheren Grades zu einer besseren Kalibration der Messlinien, was die Erfassungsgenauigkeit wirksam steigern kann, wenn beispielsweise im Rahmen der Kalibration die Messlinien mit algebraischen Flächen - und nicht wie üblich mit Ebenen - kalibriert werden.

Zusammenfassend wird durch die vorliegende Erfindung ein Verfahren (sowie ein Intraoralscanner) zur Erfassung der Topographie der Oberfläche eines transluzenten, insbesondere dentalen, Objektes beschrieben, welches eine höhere Lichteffizienz und somit eine höhere erreichbare Lichtintensität der strukturierten Beleuchtung aufweist. Die höhere Lichteffizienz wird unmittelbar durch die Abwesenheit von Absorption oder Reflexion bei der Erzeugung der strukturierten Beleuchtung mittels Lichtbeugung erreicht. Die Erfassungsgenauigkeit kann zudem unter Beibehaltung einer hohen Lichteffizienz zusätzlich gesteigert werden, indem eine Polarisation der strukturierten Beleuchtung unter Nutzung der natürlichen Polarisationseigenschaften von Laserdioden erzielt wird, anstatt der Verwendung einer unpolarisierten Lichtquelle in Verbindung mit einem Polarisationsfilter zwischen Lichtquelle und Objekt.

Im Kontext eines Intraoralscanners ist eine Maximierung der Lichtintensität der strukturierten Beleuchtung besonders vorteilhaft. Ein Grund dafür ist, dass ein Intraoralscanner entsprechend dem Stand der Technik manuell über die zu vermessenden Oberflächen geführt wird. Hierbei entstehen im Vergleich zu 3D-Scannern für andere Anwendungen besonders große Geschwindigkeiten (Bewegungsgeschwindigkeit) in Relation zur Größe der aufzulösenden Bildinhalte und zur erforderlichen Erfassungsgenauigkeit. Um eine unvermeidbare Bewegungsunschärfe zu minimieren, muss die Integrationszeit der strukturierten Beleuchtung minimiert werden, was im Falle mehrerer zeitlich sequenzieller Projektionen durch eine Verkürzung der Projektionsdauer oder im Falle einer dauerhaften Projektion durch eine Verkürzung der Belichtungszeit der Erfassungseinrichtung erreicht werden kann. Die minimal nutzbare Integrationszeit hängt unmittelbar von der von der Projektionseinrichtung erzeugten Lichtintensität auf der Objektoberfläche ab. Je höher die Lichtintensität, desto kürzer kann die Integrationszeit bei Gewährleistung eines erforderlichen Signal-Rausch-Verhältnisses der Bilderfassung gewählt werden. Ein Intraoralscanner nach der vorliegenden Erfindung weist deshalb prinzipbedingt eine geringere Mindestintegrationszeit auf, und ist somit robuster gegenüber Bewegungsunschärfe. Zudem kann durch die geringere Mindestintegrationszeit die Frequenz der 3D-Erfassung (Erfassung der Topographie) erhöht werden. Eine hohe Frequenz der 3D-Erfassung ist besonders im Kontext eines Intraoralscanners vorteilhaft ist, da so bei einer gegebenen Bewegungsgeschwindigkeit des Handstücks ein größerer Überlapp zwischen jeweils zwei Teiltopographien besteht. Der größere Überlapp bedingt wiederum eine bessere und robustere Ausrichtung der Teiltopographien zueinander.

Ein weiterer Vorteil einer höheren Lichtintensität der strukturierten Beleuchtung ist die Realisierbarkeit einer höheren Schärfentiefe der Bilderfassung. Im Kontext eines Intraoralscanners ist eine möglichst hohe Schärfentiefe vorteilhaft da, bedingt durch die Topographie der Mundhöhle und der handgeführten Bewegung des Intraoralscanners, im Vergleich zur Größe der aufzulösenden Bildinhalte große Änderungen des Abstands zur Objektoberfläche zu erwarten sind. Eine hohe Schärfentiefe der Bilderfassung kann bis zur Beugungsbegrenzung durch eine hohe Blendenzahl, d.h. einer kleinen Apertur der Bildaufnahme erreicht werden. Je höher die Lichtintensität, desto kleiner kann die Apertur bei Gewährleistung eines erforderlichen Signal-Rausch-Verhältnisses der Bilderfassung gewählt werden.

Ein weiterer Vorteil der mit der vorliegenden Erfindung realisierten Lichteffizienz liegt in einer daraus ableitbaren gesteigerten Energieeffizienz. Aufgrund der Energieeffizienz des hier beschriebenen Intraoralscanners kann im Vergleich zu anderen im Stand der Technik bekannten Intraoralscannern auf eine aktive Kühlung verzichtet werden. Hierdurch werden Hardwarekosten und Fertigungskomplexität eingespart, und das Gerät ist leiser und wartungsärmer. Zudem wird das Handstück weniger warm, was für den Benutzer (z. B. Bediener oder Patient) angenehmer sein kann. Ein energieeffizienter Intraoralscanner ist außerdem von Vorteil für einen drahtlosen Betrieb unter Verwendung einer in das Handstück integrierten Stromquelle.

Ein weiterer Vorteil der hier beschriebenen Erfindung liegt in einer gegenüber dem Stand der Technik kompakter realisierbaren Projektionseinheit, und somit einem kompakter realisierbaren Handstück (Miniaturisierung des Handstücks).

Im Vergleich zum Stand der Technik weist ein erfindungsgemäßer Intraoralscanner deutlich geringere Hardwarekosten auf. Insbesondere der im Stand der Technik gebräuchliche dynamische räumliche Lichtmodulator (z.B. ein Mikrospiegelarray) und die dafür notwendige Steuerungselektronik sind im Vergleich zur für die vorliegende Erfindung notwendigen Hardware sehr kostenintensiv.

Die vorliegende Erfindung erfüllt somit den Bedarf nach einem in höchstem Maße praxistauglichen und zugleich kosteneffizient herzustellenden Intraoralscanner (zum Erfassen der Topographie der Oberfläche von transluzenten, insbesondere dentalen, Objekten).

Dadurch, dass die Erfassung der Topographie der Oberfläche durch das zumindest teilweise Überlagern von zwei Teiltopographien von zwei (zumindest teilweise überlappenden) Teilbereichen der Oberfläche erfolgt, kann die Erfassungsgenauigkeit der Topographie erhöht werden - können doch (im Überlappungsbereich der beiden Teilbereiche) Erfassungsungenauigkeiten, die in der ersten Teiltopographie auftreten (z. B. hervorgerufen durch eine ungünstige Beleuchtungssituation und/oder Reflexionen), teilweise durch die zweite Teiltopographie kompensiert werden, wenn der entsprechende Bereich dort genauer erfasst wurde. Da insbesondere bei der Erfassung von transluzenten (insbesondere dentalen) Oberflächen derartige Erfassungsungenauigkeiten bedingt durch die Transluzenz der zu den Oberflächen gehörenden Objekte typischerweise vermehrt auftreten, eignet sich das beschriebene Verfahren in ganz besonderem Maße für die Erfassung derartiger Oberflächen. Das Überlagern der Teiltopographien kann mittels im Stand der Technik bekannter Verfahren, beispielsweise des Iterative Closest Point (ICP) Algorithmus durchgeführt werden.

Das Erfassen der Teiltopographien der Teilbereiche der Oberfläche mittels Triangulation setzt dabei die Lösung des oben beschriebenen Korrespondenzproblems mittels eines geeigneten, im Stand der Technik bekannten Verfahrens voraus. Besonders vorteilhaft kann hierzu vorgesehen sein, dass:
- die Messlinien auf möglichen Messlinienpositionen des Gesamtmessmusters angeordnet sind, wobei die möglichen Messlinienpositionen einem Gitter mit konstanter Messlinienperiode entsprechen, und eine auf einer möglichen Messlinienposition angeordnete Messlinie als dargestellte Messlinie bezeichnet wird und eine mögliche Messlinienposition, auf der keine Messlinie angeordnet ist, als nicht-dargestellte Messlinie bezeichnet wird,
- das erste Messmuster eine erste Zuordnung von dargestellten Messlinien und optional nicht-dargestellten Messlinien zu den möglichen Messlinienpositionen festlegt, das zweite Messmuster eine zweite Zuordnung von dargestellten Messlinien und nicht-dargestellten Messlinien zu den möglichen Messlinienpositionen festlegt,
- und das erste Messmuster und das zweite Messmuster so gestaltet sind, dass eine durch die erste Zuordnung und die zweite Zuordnung ausgebildete Kombination aus dargestellten und nicht-dargestellten Messlinien auf den möglichen Messlinienpositionen das Lösen des Korrespondenzproblems ermöglicht.

Die Messlinienperiode beschreibt dabei den Abstand zwischen zwei benachbarten möglichen Messlinienpositionen. Die Zuordnung der dargestellten und nicht-dargestellten Messlinien zu den möglichen Messlinienpositionen erfolgt durch die Gestaltung der beugungsaktiven Regionen der den Messmustern zugeordneten DOEs. Es kann der Auflösung bzw. Datendichte und der Genauigkeit der Erfassung der Oberfläche zuträglich sein, wenn eines der Messmuster ausschließlich dargestellte Messlinien (und keine nicht-dargestellten Messlinien) den möglichen Messlinienpositionen zuordnet. Man spricht in diesem Zusammenhang auch von einem vollbesetzten oder dichten Messmuster.

Gemäß einer weiteren vorteilhaften Ausgestaltung kann vorgesehen sein, dass (dargestellte und nicht-dargestellte) Messlinien, die einer gemeinsamen möglichen Messlinienposition zugeordnet sind, eine (der möglichen Messlinienposition zugeordnete) Gruppe von Messlinien ausbilden, und eine Kombination aus dargestellten und nicht-dargestellten Messlinien innerhalb der Gruppe einem (der möglichen Messlinienposition zugeordneten) Symbol entsprechen.

Die Gesamtheit aller möglichen Symbole wird dabei als Alphabet bezeichnet. Beispielsweise kann bei einem aus zwei Messmustern bestehenden Gesamtmessmuster eine Gruppe von Messlinien bis zu vier Kombinationen (Zustände) aus dargestellten und nicht-dargestellten Messlinien bilden; dies entspricht einem Alphabet mit bis zu vier (2^2 = 4) Symbolen. Bei einem aus drei Messmustern bestehenden Gesamtmessmuster kann das Alphabet entsprechend bis zu acht (2^3 = 8) Symbolen umfassen.

Folgende Auflistung zeigt zur weiteren Verdeutlichung ein Alphabet aus vier Symbolen (0, 1, 2, 3), welches (durch Kombinationen aus dargestellten und nicht-dargestellten Messlinien einer Gruppe) bei einem aus zwei Messmustern bestehenden Gesamtmessmuster gebildet werden kann:
- Symbol 0: Kombination aus einer nicht-dargestellten Messlinie im ersten Messmuster und im zweiten Messmuster,
- Symbol 1: Kombination aus einer nicht-dargestellten Messlinie im ersten Messmuster und einer dargestellten Messlinie im zweiten Messmuster,
- Symbol 2: Kombination aus einer dargestellten Messlinie im ersten Messmuster und einer nicht-dargestellten Messlinie im zweiten Messmuster,
- Symbol 3: Kombination aus einer dargestellten Messlinie im ersten Messmuster und im zweiten Messmuster.

Dabei kann gemäß einer weiteren vorteilhaften Ausgestaltung vorgesehen sein, dass
- das Gesamtmessmuster eine Symbolsequenz (Abfolge von Symbolen) ausbildet deren Länge (Anzahl Symbole) der Anzahl der möglichen Messlinienpositionen entspricht, und
- jeder möglichen Messlinienposition genau ein Symbol der Symbolsequenz zugeordnet ist, und
- eine Abfolge einer Mehrzahl von n Symbolen, die benachbarten möglichen Messlinienpositionen zugeordnet sind, einem Wort entsprechen, und
- in der Symbolsequenz jedes (enthaltene) Wort der Länge n nur so oft vorkommt, dass das Lösen des Korrespondenzproblems ermöglicht wird, und/oder
- in der Symbolsequenz jedes (enthaltene) Wort der Länge n höchstens dreimal, insbesondere höchstens zweimal, vorkommt.

Die natürliche Zahl n bezeichnet hierbei die Wortlänge der Symbolsequenz. Ein Wort kommt dabei beispielsweise zweimal in der Symbolsequenz vor, wenn die für das Wort charakteristische Abfolge von benachbarten Symbolen an zwei Stellen in der Symbolsequenz auftritt.

Zur Verdeutlichung ist beispielhaft folgende (abgekürzte) Symbolsequenz gegeben, die so gestaltet ist, dass jedes enthaltene Wort der Wortlänge drei (n=3) nur einmal vorkommt:
Symbolsequenz: 0, 0, 0, 1, 0, 0, 2, 0, 0, 3,..., 2, 3, 2, 3, 3, 3

Die Wörter werden dabei durch jeweils drei (n=3) benachbarte Symbole gebildet:
- Wort 1: 0,0,0
- Wort 2: 0,0,1
- Wort 3: 0,1,0

Die Lösung des Korrespondenzproblems besteht in der Zuordnung von Indizes möglicher Messlinienpositionen zu erkannten Messlinien in von der Erfassungseinrichtung bereitgestellten Bildern. Die Indizes möglicher Messlinienpositionen sind natürliche Zahlen, wobei beispielsweise die erste mögliche Messlinienposition den Index 1 trägt, die zweite mögliche Messlinienposition den Index 2 trägt, und die mögliche Messlinienposition k den Index k trägt. Im gegebenen Beispiel ist die Zuordnung der Indizes möglicher

Messlinienpositionen zu den Wörtern (und dementsprechend der Symbolsequenz) wie folgt:
- Wort 1: {1, 2, 3}
- Wort 2: {2, 3, 4}
- Wort 3: {3, 4, 6}

Die Lösung des Korrespondenzproblems kann dann beispielsweise die folgenden Schritte umfassen:
- Erkennen der Kombination von dargestellten und nicht-dargestellten Messlinien auf möglichen Messlinienpositionen des Gesamtmessmusters in von der Erfassungseinrichtung bereitgestellten Bildern,
- Zuordnen von Symbolen zu möglichen Messlinienpositionen entsprechend der erkannten Kombinationen von dargestellten und nicht-dargestellten Messlinien,
- Bilden von Wörtern aus den Symbolen, die benachbarten möglichen Messlinienpositionen zugeordnet sind, und
- Zuweisen der Indizes möglicher Messlinienpositionen zu den Wörtern.

Es sei darauf hingewiesen, dass das lediglich einmalige Vorkommen eines Worts in der Symbolsequenz in der Praxis nicht unbedingt zur

Lösung des Korrespondenzproblems notwendig ist. Vielmehr können Mehrdeutigkeiten auch dadurch gelöst werden, dass beispielsweise ein begrenzter Arbeitsraum zur Erkennung ungültiger Korrespondenzen (und dadurch zur Herstellung eindeutiger Korrespondenzen) herangezogen wird.

Gemäß einer weiteren vorteilhaften Ausgestaltung kann die Symbolsequenz als De-Bruijn-Sequenz ausgebildet sein.

Eine Ausführung der mindestens einen Lichtquelle als Laserlichtquelle kann besonders vorteilhaft sein, da sich dadurch ein besonders kosteneffizienter und kompakter Intraoralscanner realisieren lässt. Zudem ist eine Laserlichtquelle in der Lage, kohärentes und spektral schmalbandiges Licht zu erzeugen, welches besonders geeignet ist um eine hochaufgelöste (Mess-)Musterprojektion mittels Lichtbeugung zu erzeugen, da der Effekt der Lichtbeugung wellenlängenabhängig ist.

Gemäß einer vorteilhaften Ausgestaltung kann jedem diffraktiven optischen Element (und damit jedem Messmuster) eine individuelle Lichtquelle zugeordnet sein. Eine jedem Messmuster individuell zugeordnete (Laser-)Lichtquelle stellt eine effiziente Möglichkeit dar, mehrere Messmuster sequentiell oder gleichzeig zu projizieren. Zudem kann die von der Projektionseinrichtung zu erbringende Lichtleistung auf mehrere (Laser-)Lichtquellen verteilt werden, wodurch die (Leistungs-)Anforderungen an eine einzelne Lichtquelle reduziert werden und somit auch die (oftmals durch lokale thermische Rahmenbedingungen begrenzte) Gesamtlichtleistung vervielfältigt werden kann.

Gemäß einer weiteren vorteilhaften Ausgestaltung kann mittels einer Beleuchtungsvorrichtung eine unstrukturierte Beleuchtung auf der Oberfläche des Objekts mit gleichmäßig verteilter Intensität erzeugt werden, wobei optional die unstrukturierte Beleuchtung rotes, grünes, blaues, weißes, ultraviolettes, nah-infrarotes oder infrarotes Licht oder eine Kombination hiervon umfasst. Eine solche Beleuchtung ist vorteilhaft zur Erfassung einer örtlich aufgelösten Farbinformation der Objektoberfläche (Farbbilderfassung). Die Beleuchtung kann spektral breitbandig (z.B. weiß), oder spektral schmalbandig (z.B. rot, grün, blau, ultraviolett, nahinfrarot oder infrarot) sein. Es können mehrere Spektren oder Farben aktivier- und deaktivierbar sein. Die unstrukturierte Beleuchtung kann beispielsweise mittels LED-Beleuchtung bereitgestellt werden, oder durch die Kombination mehrfarbiger Laser. Die Beleuchtungsvorrichtung kann vorteilhaft eine ringförmige Lichtquelle oder eine ringförmige Anordnung von Lichtquellen umfassen. Die ringförmige Beleuchtungsvorrichtung kann dann konzentrisch um die Erfassungsachse der Erfassungseinrichtung angeordnet sein, sodass aus Sicht der Erfassungseinrichtung eine gleichmäßige Beleuchtung erzielt wird, die Sicht der Erfassungseinrichtung auf das Objekt jedoch nicht verdeckt wird.

Gemäß einer weiteren vorteilhaften Ausgestaltung kann das erste Messmuster in einem ersten Wellenlängenspektrum und das zweite Messmuster in einem zweiten Wellenlängenspektrum, insbesondere gleichzeitig, projiziert sein, und kann die Erfassungseinrichtung derart spektralselektiv eingerichtet sein, dass das erste Bild mittels überwiegender Erfassung von Licht des ersten Wellenlängenspektrums und das zweite Bild mittels überwiegender Erfassung von Licht des zweiten Wellenlängenspektrums bereitgestellt wird.

Der Begriff der überwiegenden Erfassung von Licht eines gewissen Wellenlängenspektrums ist dabei in diesem Zusammenhang vor dem Hintergrund zu verstehen, dass bei spektralselektiven Erfassungseinrichtungen bei der spektralselektiven Erfassung von Licht eines definierten Wellenlängenspektrums technisch bedingt typischerweise in geringem Umfang auch Licht außerhalb des definierten Wellenlängenspektrums miterfasst wird - der ganz überwiegende Teil des erfassten Lichts allerdings dem definierten Wellenlängenspektrum zuzuordnen ist.

Eine spektralselektiv eingerichtete Erfassungseinrichtung (spektralselektive Erfassungseinrichtung) kann beispielsweise als eine RGB-Farbkamera ausgeführt sein (wobei RGB engl. "red", "green", "blue" entspricht), und die Projektion der Messmuster kann zeitgleich mittels roten, grünen und blauen Lichts sowie Teilmengen oder Kombinationen hiervon erfolgen. Ebenso kann die Erfassungseinrichtung in anderen Spektralbereichen selektiv sein, beispielsweise in zwei oder mehreren Wellenlängenintervallen von blauem Licht. Die Projektionseinrichtung kann dann vorteilhaft auch mehrere Messmuster zeitgleich in unterschiedlichen (Wellenlängen-)Spektren projizieren. Spektralselektiv bedeutet hier, dass die Erfassungseinrichtung unterschiedliche (Wellenlängen-)Spektren unterscheiden kann, bzw. die unterschiedlichen Spektren unterschiedlichen Bildkanälen und somit unterschiedlichen Bildern zuordnen kann. Eine solche spektralselektive Erfassungseinrichtung kann auch aus mehreren Kameras und spektralselektiven Komponenten bestehen, die zwischen den Kameras und der Objektoberfläche angeordnet sind. Solche spektralselektiven Komponenten können beispielsweise als dichroitische Strahlteiler, Bandpassfilter oder Bandsperrfilter (engl. "notch filter") ausgeführt sein.

Gemäß einer weiteren vorteilhaften Ausgestaltung der Erfindung kann das erste Messmuster in einem ersten Polarisationszustand oder in einer ersten Polarisationsrichtung und das zweite Messmuster in einem zweiten Polarisationszustand oder in einer zweiten Polarisationsrichtung, insbesondere gleichzeitig, projiziert sein, und kann die Erfassungseinrichtung derart polarisationsselektiv oder polarisationssensitiv eingerichtet sein, dass das erste Bild mittels überwiegender Erfassung von Licht der ersten Polarisationsrichtung oder des ersten Polarisationszustands und das zweite Bild mittels überwiegender Erfassung von Licht der zweiten Polarisationsrichtung oder des zweiten Polarisationszustands bereitgestellt wird.

Wird beispielsweise das erste Messmuster in einem ersten Polarisationszustand projiziert und das zweite Messmuster in einem (zum ersten Polarisationszustand unterschiedlichen) zweiten Polarisationszustand projiziert, und erfolgen beide Projektionen zeitgleich, so können die beiden projizierten Messmuster mit einer entsprechend eingerichteten Erfassungseinrichtung unterschieden und in zwei unterschiedlichen Bildern bereitgestellt werden. Die Polarisationszustände können lineare Polarisationszustände unterschiedlicher Richtungen, oder zirkulare Polarisationszustände unterschiedlicher Richtungen wie RHCP (engl. Right Hand Circular Polarisation) oder LHCP (engl. Left Hand Circular Polarisation), oder Kombinationen hiervon umfassen.

Eine polarisationsselektive Erfassungseinrichtung entspricht einer Erfassungseinrichtung, die in der Lage ist, Polarisationszustände zu unterscheiden bzw. Bildinformation abhängig vom Polarisationszustand in unterschiedlichen Bildkanälen (und somit in unterschiedlichen Bildern) zu erfassen.

Eine polarisationssensitive Erfassungseinrichtung entspricht einer Erfassungseinrichtung, die mindestens einen Bildkanal bereitstellt, der einem definierten Polarisationszustand entspricht.

Gemäß einer besonders vorteilhaften Ausgestaltung können zwei Messmuster zeitgleich mit unterschiedlichen linearen Polarisationsrichtungen projiziert werden, wobei die zwei linearen Polarisationsrichtungen zueinander orthogonal sind. Sind beide Lichtquellen als Laserlichtquelle ausgeführt, welche jeweils linear polarisiertes Licht emittiert, können die linearen Polarisationsrichtungen der natürlichen Polarisation der jeweiligen Lichtquelle entsprechen, wobei die Orthogonalität durch einen bezüglich der Emissionsrichtung (bzw. Projektionsachse) um 90° rotatorisch versetzten Einbau der Laserlichtquellen realisiert werden kann.

Gemäß einer anderen vorteilhaften Ausgestaltung können zwei Messmuster zeitgleich mit unterschiedlichen zirkularen Polarisationsrichtungen projiziert werden, wobei eines der Messmuster den Polarisationszustand RHCP, und das andere Messmuster den Polarisationszustand LHCP aufweist.

Gemäß einer weiteren vorteilhaften Ausgestaltung kann mindestens eines der Messmuster punktsymmetrisch zu einem Messmustermittelpunkt ausgebildet sein und kann optional das zugeordnete diffraktive optische Element als binäres diffraktives optisches Element ausgebildet sein. Ganz besonders vorteilhaft sind dabei alle Messmuster jeweils punktsymmetrisch zu ihrem jeweiligen Messmustermittelpunkt ausgebildet und sind alle diffraktiven optischen Elemente als binäre diffraktive optische Elemente ausgebildet.

Binäre diffraktive optische Elemente weisen eine höhere Beugungseffizienz auf und erreichen somit eine höhere Lichteffizienz. Des Weiteren sind sie einfacher und somit kostengünstiger herzustellen als nicht-binäre DOEs, und der maximal projizierbare Öffnungswinkel ist bei gegebener Lichtwellenlänge und Qualität der Musterprojektion größer. Die Messmusterprojektionen binärer DOEs sind prinzipbedingt symmetrisch zu einen Messmustermittelpunkt ausgebildet, wobei der Messmustermittelpunkt auf der Projektionsachse P liegt (welche der Achse des einfallenden Laserstrahls entspricht). Als zu projizierende Messmuster werden daher vorzugsweise mittelpunktsymmetrische Muster verwendet, da diese mit binären DOEs darstellbar sind.

Binäre diffraktive optische Elemente stellen somit eine besonders lichteffiziente und kostengünstige Ausführung der Musterprojektion mittels Lichtbeugung dar, wenngleich nur punktsymmetrisch ausgeführte Messmuster erzeugt werden können.

Generell eignen sich Messlinien im besonderen Maße als Messelemente, da sie eine besonders hohe Anzahl an rekonstruierbaren Messpunkten (bzw. Bildpunkten) erzeugen können.

Gemäß einer weiteren vorteilhaften Ausgestaltung können die Messmuster jeweils in Richtung einer Projektionsachse auf die Oberfläche projizierbar sein und können die Projektionsachsen in einer gemeinsamen Projektionsachsenebene angeordnet sein, die zur Richtung der Messlinien parallel ist, und kann optional mindestens ein Messmustermittelpunkt eines Messmusters in der Projektionsachsenebene angeordnet sein. Eine Projektionsachse ist hierbei als geometrische Gerade zu verstehen, die durch den Mittelpunkt des auf das diffraktive optische Element einfallenden Strahls verläuft. Die Richtung der Messlinien wird durch die Längserstreckung der Messlinien definiert. Diese Anordnung bewirkt vorteilhaft eine räumliche Konstanz des Gesamtmessmusters. Das Gesamtmessmuster entsteht durch die Überlagerung der Mehrzahl der projizierten Messmuster. Eine räumliche Konstanz des Gesamtmessmusters kennzeichnet hier, dass das Gesamtmessmuster sich abhängig vom Projektionsabstand lediglich im Maßstab bzw. der Größe ändert, nicht jedoch in den maßstabsrelativen Abständen der Messlinien zueinander (senkrecht zur Richtung der Messlinien). Eine räumliche Konstanz des Gesamtmessmusters ist für eine Topographieerfassung mittels strukturierter Beleuchtung vorteilhaft, da sie eine reproduzierbare, abstandsunabhängige Zuordnung von Messlinien aus mehreren Messmustern zueinander ermöglicht. Zudem lassen sich so mehrere aus Messlinien bestehende Messmuster in exakte Überdeckung bringen, was vorteilhaft für eine 3D-Rekonstruktionsmethode ist, die eine örtliche Zuordnung von Messlinien verschiedener Messmuster erfordert.

Gemäß einer weiteren vorteilhaften Ausgestaltung kann die Projektion der Messmuster unter unterschiedlichen Öffnungswinkeln erfolgen. So kann erreicht werden, dass die Messmuster in der Arbeitsebene einen gewünschten Flächenbereich gemeinsam überdecken, wobei der jeweilige Öffnungswinkel der Messmusterprojektion so gewählt ist, dass in der Arbeitsebene der gewünschte Flächenbereich vollständig gemeinsam überdeckt wird und die Überdeckung verbleibender Bereiche (Bereiche außerhalb des gewünschten Flächenbereichs) minimiert wird. Die Arbeitsebene ist diejenige Ebene, auf die die für die Topographieerfassung benötigten optischen Komponenten für eine optimale Funktion ausgelegt sind. Ein gemeinsam überdeckter Flächenbereich der projizierten Muster (Musterprojektion) ist vorteilhaft im Sinne der gemeinsamen Verarbeitung der Messmuster nach dem Verfahren der strukturierten Beleuchtung. Da unterschiedliche Musterprojektionen erfindungsgemäß nicht denselben Projektionsursprung aufweisen, kann mittels unterschiedlicher Öffnungswinkel eine gemeinsame Überdeckung eines gewünschten Flächenbereichs erzeugt werden, wobei die unerwünschte Projektion auf verbleibende Bereiche minimiert werden kann. Eine Projektion auf verbleibende Bereiche ist insbesondere unerwünscht, da sie die Lichteffizienz der Projektionseinrichtung reduziert und unerwünschtes Streulicht erzeugt. Diese Ausgestaltung ist somit vorteilhaft im Sinne der Lichteffizienz und Qualität der Messmusterprojektion. Mit anderen Worten wird vorgeschlagen zur Erreichung eines gemeinsam überdeckten Bereichs der Messmusterprojektionen bei zugleich optimaler Lichteffizienz, die jeweiligen Öffnungswinkel der Projektionen der Messmuster zu minimieren, was mittels unterschiedlicher Öffnungswinkel der einzelnen DOEs realisiert werden kann.

Gemäß einer weiteren vorteilhaften Ausgestaltung der Erfindung kann die Projektionseinrichtung mindestens eine astigmatische Linse (oder Optik) umfassen.

Gemäß einer weiteren vorteilhaften Ausgestaltung der Erfindung kann mindestens eines der diffraktiven optischen Elemente lichtfokussierend wirksam sein.

Gemäß einer weiteren vorteilhaften Ausgestaltung kann die Projektionseinrichtung mindestens einen Strahlteiler und mindestens einen räumlichen Lichtmodulator umfassen, wobei der Lichtmodulator insbesondere zwischen dem Strahlteiler und der zu erfassenden Oberfläche des Objekts (der Lichtmodulator also bezogen auf die Propagationsrichtung des Lichts nach dem Strahlteiler) angeordnet ist. Ein räumlicher Lichtmodulator kann mittels eines Flüssigkristalldisplays (z. B. LCD oder LCoS) oder anderer Methoden der räumlichen Lichtmodulation realisiert sein. Der Begriff modulierbar betrifft hier die Fähigkeit der Steuerung einer Transmission, Reflexion, Absorption oder Phasenlage des ausgehenden Lichtstrahls gegenüber dem einfallenden Lichtstrahl.

Gemäß einer weiteren vorteilhaften Ausgestaltung kann die Projektionseinrichtung eine Beleuchtungsvorrichtung zur Erzeugung einer unstrukturierten Beleuchtung auf der Oberfläche des Objekts mit gleichmäßig verteilter Intensität umfassen und kann optional die unstrukturierte Beleuchtung rotes, grünes, blaues, weißes, ultraviolettes, nah-infrarotes oder infrarotes Licht oder eine Kombination hiervon umfassen.

Gemäß einer weiteren vorteilhaften Ausgestaltung kann mindestens ein Betriebsparameter einer als Laserlichtquelle ausgeführten (mindestens einen) Lichtquelle geregelt sein und/oder kann der mindestens eine Betriebsparameter mit einer Frequenz im Bereich von 1-1000 MHz modulierbar sein. Die Regelung kann beispielsweise die Parameter Temperatur oder Stromstärke betreffen, sowie Kombinationen hiervon. Beide optionalen Merkmale (Regelung und hochfrequente Modulation), können Schwankungen der Lichtemission, sowohl in Bezug auf das emittierte Spektrum, als auch die emittierte Lichtleistung, reduzieren.

Gemäß einer weiteren vorteilhaften Ausgestaltung kann die Projektionseinrichtung die Messmuster insbesondere im Wellenlängenbereich von 400nm - 480nm erzeugen. Dies kann insbesondere dadurch realisiert werden, dass die mindestens eine Lichtquelle Licht im Wellenlängenbereich von 400 - 480nm emittiert. Dieser Wellenlängenbereich ist vorteilhaft für die 3D-Erfassung transluzenter und insbesondere dentaler Oberflächen, da diese hier einen besonders geringen Effekt der Volumenstreuung und Eindringtiefe des Lichts aufweisen. Dies führt zu einer Verbesserung des Signal-Rauschverhältnisses und somit der Genauigkeit der 3D-Erfassung.

Gemäß einer weiteren vorteilhaften Ausgestaltung der Erfindung kann der Intraoralscanner einen Umlenkspiegel umfassen. Der Umlenkspiegel ist dabei ein optionales Bauteil, das bei einem Intraoralscanner Vorteile bzgl. der Erreichbarkeit relevanter Regionen innerhalb der Mundhöhle bieten kann. Der Umlenkspiegel kann beheizbar sein, um ein Beschlagen durch Atemluft hoher Luftfeuchte zu verhindern. Das Beheizen auf eine Temperatur zwischen ca. 37 und ca. 42°C führt dazu, dass Feuchtigkeit in der ausgeatmeten Luft nicht auf der Spiegeloberfläche kondensiert, und der Spiegel einfallendes Licht optimal reflektiert; auch andere Temperaturbereiche können die gewünschte Wirkung zeigen.

Im Folgenden wird die Erfindung anhand von Ausführungsbeispielen in Verbindung mit den Figuren näher beschrieben. Es zeigen:
- Figur 1 eine schematische Darstellung des im Stand der Technik bekannten Verfahrens der strukturierten Beleuchtung in Verbindung mit Triangulation, gemeinsam auch als aktive Triangulation bezeichnet,
- Figur 2.1 eine schematische Darstellung eines Ausführungsbeispiels eines erfindungsgemäßen Intraoralscanners in Seitenansicht
- Figur 2.2 eine schematische Darstellung eines weiteren Ausführungsbeispiels eines erfindungsgemäßen Intraoralscanners in Seitenansicht,
- Figur 2.3 eine schematische Darstellung eines Ausführungsbeispiels eines erfindungsgemäßen Intraoralscanners in Draufsicht, beschränkt auf den Bereich der Scanspitze,
- Figur 3 eine schematische Darstellung eines erfindungsgemäßen Intraoralscanners in einer ersten Position zur Erfassung einer ersten Teiltopographie und in einer zweiten Position zur Erfassung einer zweiten Teiltopographie,
- Figur 4.1 eine schematische Darstellung einer Projektionseinrichtung eines erfindungsgemäßen Intraoralscanners in Seitenansicht,
- Figur 4.2 eine schematische Darstellung einer Projektionseinrichtung eines erfindungsgemäßen Intraoralscanners in Draufsicht
- Figur 4.3 eine schematische Darstellung von drei, auf einem gemeinsamen Substrat angeordneten, diffraktiven optischen Elementen eines erfindungsgemäßen Intraoralscanners,
- Figur 4.4 eine schematische Darstellung eines Messmusters eines erfindungsgemäßen Intraoralscanners,
- Figur 4.5 eine schematische Darstellung einer Projektionseinrichtung eines erfindungsgemäßen Intraoralscanners in Draufsicht,
- Figur 5.1 eine schematische Darstellung einer Projektionseinrichtung eines erfindungsgemäßen Intraoralscanners in Draufsicht und Seitenansicht,
- Figur 5.2 eine schematische Darstellung einer Projektionseinrichtung eines erfindungsgemäßen Intraoralscanners in Draufsicht und Seitenansicht,
- Figur 6.1 eine schematische Darstellung einer Projektionseinrichtung eines erfindungsgemäßen Intraoralscanners in Draufsicht,
- Figur 6.2 eine schematische Darstellung eines Lichtmodulators eines erfindungsgemäßen Intraoralscanners in Draufsicht
- Figur 7 schematische Darstellungen von ein Gesamtmessmuster ausbildenden Messmustern und
- Figur 8 eine schematische Darstellung eines erfindungsgemäßen Intraoralscanners.

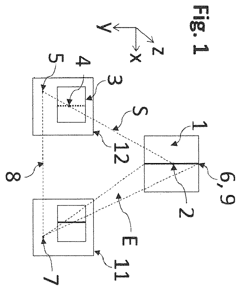

Zur Erläuterung des allgemeinen Hintergrundes der vorliegenden Erfindung wird zunächst anhand von Figur 1 das im Stand der Technik bekannte und zum allgemeinen Fachwissen zählende Verfahren der strukturierten Beleuchtung in Verbindung mit Triangulation (gemeinsam auch als Verfahren der aktiven Triangulation bezeichnet) näher beschrieben (siehe dazu auch die Fachbücher "Multiple View Geometry in Computer Vision" von Richard Hartley et al. oder "Handbook of 3D Machine Vision" von Song Zhang). Das Verfahren der aktiven Triangulation kann eingesetzt werden, um die Topographie der Oberfläche 1 eines Objektes zu erfassen. Figur 1 zeigt dies beispielhaft anhand einer Vorrichtung bestehend aus einer Projektionseinrichtung 11 und einer Erfassungseinrichtung 12.

Die Projektionseinrichtung 11 projiziert ein Messmuster 6, hier lediglich bestehend aus einem als Messlinie 9 ausgebildeten Messelement auf die Oberfläche 1 (deren Topographie erfasst werden soll). Die Erfassungseinrichtung 12 erfasst ein Bild 3 des projizierten Messmusters auf der Objektoberfläche. In diesem Bild 3 kann eine Vielzahl von Bildpunkten detektiert werden die die projizierte Linie darstellen, wovon zur besseren Übersicht nur ein Bildpunkt 4 gekennzeichnet ist. In einem Messlinien umfassenden Messmuster werden in der Praxis die Zentren der Messlinien als lokale (Licht-)Intensitätsmaxima ermittelt und zur Konstruktion der Sichtgeraden S verwendet. Unter Nutzung einer Mehrzahl kalibrierter Parameter von Projektionseinrichtung und Erfassungseinrichtung kann mittels geometrischer Berechnungen ein Schnittpunkt 2 der Sichtgeraden S und der Projektionsebene E berechnet werden, der einer erfassten dreidimensionalen Koordinate der Objektoberfläche im Koordinatensystem x, y, z entspricht. Die dreidimensionale Projektionsebene E repräsentiert die von der Projektionseinrichtung 11 projizierte (der Messlinie 9 zugeordnete) "Lichtebene" und ergibt sich ebenfalls aus kalibrierten Parametern des Systems. Die kalibrierten Parameter umfassen beispielsweise sog. intrinsische Parameter der Projektions- und Erfassungseinrichtung wie Brennweite, Bild-/Projektionsmittelpunkt und sog. Verzeichnungsparameter, sowie extrinsische Parameter wie die relative Lage von Projektionsursprung 7 und Bildursprung 5 zueinander und somit auch die sog. Triangulationsbasis 8. Verfahren zur Kalibration entsprechender Systeme sind im Stand der Technik bekannt, ebenso die zur Triangulation notwendigen geometrischen Berechnungen. In der Praxis werden eines oder mehrere verschiedene Messmuster projiziert. Die Messmuster können eine oder mehrere Messlinien enthalten oder auch gänzlich anders gestaltet sein, z.B. in Form von Punktmustern oder farbkodierten Streifenmustern. Im dargestellten Beispiel besteht das Messmuster 6 nur aus einer Messlinie 9. Da hier nur eine "Lichtebene" projiziert wird somit nur eine Projektionsebene E existiert, spricht man auch von einer "trivialen" Lösung des Korrespondenzproblems. Das Korrespondenzproblem besteht in der Zuordnung eines Bildpunktes zu einem projizierten Messelement, beispielsweise einer Messlinie. Umfasst das Messmuster 6 mehr als eine Messlinie 9, wird ein Ansatz zur Lösung des Korrespondenzproblems benötigt. Wie in der Beschreibung des Stands der Technik erläutert, sind eine Vielzahl von Verfahren zur Lösung des Korrespondenzproblems bekannt, bei denen die Messelemente beispielsweise mittels unterschiedlicher Farben (farbkodierte Messelemente) und/oder durch eine charakteristische An- oder Abwesenheit von Messelementen (anwesenheitskodierte Messelemente) kodiert sind. Dabei sind sowohl zeitliche als auch räumliche Kodierung sowie Mischformen beider Methoden (hybride Kodierung) bekannt.

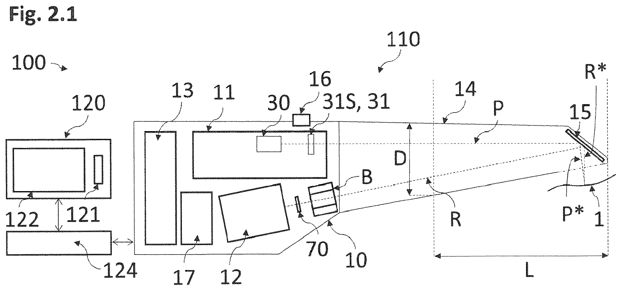

Figur 2.1 zeigt eine schematische Darstellung eines Ausführungsbeispiels eines erfindungsgemäßen Intraoralscanners 100 in Seitenansicht, umfassend ein Handstück 110 und eine über eine Schnittstelleneinheit 124 mit dem Handstück 110 wirkverbundenen Auswertevorrichtung 120.

Das Handstück 110 weist ein Handstückgehäuse 10, eine Projektionseinrichtung 11, eine Erfassungseinrichtung 12, eine Steuereinheit 13, eine Scanspitze 14, einen Umlenkspiegel 15, eine Benutzerschnittstelle 16, einen Energiespeicher 17, einen Polarisationsfilter 70 und eine Beleuchtungsvorrichtung B auf.

Die Steuereinheit 13 ist wirkverbunden mit der Projektionseinrichtung 11, der Erfassungseinrichtung 12, der Beleuchtungsvorrichtung B, dem Umlenkspiegel 15, der Benutzerschnittstelle 16 sowie der Schnittstelleneinheit 124.

Um ein Beschlagen des Umlenkspiegels 15 zu vermeiden ist dieser beheizbar. Die Beheizung des Umlenkspiegels 15 ist auf Grundlage einer gemessenen Temperatur des Umlenkspiegels (insbesondere an dessen Oberfläche) durch die Steuereinheit 13 regelbar.

Die Benutzerschnittstelle 16 zeigt in Wirkverbindung mit der Steuereinheit 13 mittels verschiedener Lichtsignale einen Betriebszustand des Intraoralscanners an, und erlaubt einen Wechsel zwischen Betriebszuständen mittels Betätigung einer Taste.

Die Projektionseinrichtung 11 umfasst drei als Laserlichtquellen ausgeführte Lichtquellen 30 mit nicht dargestellten Fokussieroptiken (z.B. Sammellinsen) sowie drei diffraktive optische Elemente 31 und ist eingerichtet um ein drei Messmuster umfassendes Gesamtmessmuster auf die Oberfläche 1 zu projizieren (und damit die Oberfläche 1 strukturiert zu beleuchten). Dabei beleuchtet jede Laserlichtquelle 30 das ihr zugeordnete diffraktive optische Element 31 mit Laserlicht in Richtung einer Projektionsachse P.

Die durch die Bestrahlung der diffraktiven optischen Elemente 31 mittels Lichtbeugung erzeugten Messmuster 6 werden in Richtung der Projektionsachsen P bzw. nach Umlenkung mittels des Umlenkspiegels 15 in Richtung der Projektionsachsen P* auf Teilbereiche einer zu erfassenden transluzenten, insbesondere dentalen, Oberfläche 1 eines Objekts projiziert.

Die Beleuchtungsvorrichtung B ist als LED-Beleuchtung ausgeführt und emittiert spektral breitbandiges Licht zur unstrukturierten Beleuchtung der Oberfläche 1. Sie ist zudem ringförmig konzentrisch um die Erfassungsachse der Erfassungseinrichtung 12 ausgebildet und insbesondere so gestaltet, dass sie die Sicht der Erfassungseinrichtung 12 auf die Oberfläche 1 nicht verdeckt.

Mittels der Erfassungseinrichtung 12, die beispielsweise als eine Monochrom- oder Farbkamera ausgeführt sein kann, können Bilder der Teilbereiche der zu erfassenden Oberfläche 1 entlang der Erfassungsachse R bzw. R* bereitgestellt werden. Die Erfassung erfolgt dabei durch den Polarisationsfilter 70.

Die von der Erfassungseinrichtung 12 bereitgestellten Bilder können mittels drahtloser oder drahtgebundener Datenübertragung über die die Schnittstelleneinheit 124 an die Rechnereinrichtung 121 sowie eine visuelle Ausgabeeinrichtung 122 umfassende Auswertevorrichtung 120 übertragen werden. Im Falle einer drahtgebundenen Verbindung erfolgt auch die Stromversorgung drahtgebunden über die Schnittstelleneinheit 124; im Falle einer drahtlosen Verbindung wird der Energiespeicher 17 zur Stromversorgung benötigt. Ebenso ist eine direkte Datenübertragung zwischen dem Handstück 110 und der Auswertevorrichtung 120 möglich. Die Auswertevorrichtung 120 kann beispielsweise als PC oder Laptop ausgeführt sein. Mittels der Rechnereinrichtung 121 kann unter Verwendung der Bilder der Teilbereiche der zu erfassenden Oberfläche 1 die Topographie der Oberfläche erfasst und beispielsweise als dreidimensionales Datenmodell bereitgestellt werden. Die visuelle Ausgabeeinrichtung 122 kann als Bildschirm ausgeführt sein und ermöglicht eine Darstellung der Topographie der Oberfläche.

Die Schnittstelleneinheit 124 umfasst eine Stromversorgung mit Netzanschluss; sie kann so auslegt sein, dass sie als Ablageort für das Handstück geeignet ist. Im Falle eines drahtlosen Handstücks kann die Stromversorgung der Schnittstelleneinheit 124 zum Aufladen des Energiespeichers 17 im Handstück 110 genutzt werden. Im Falle eines drahtgebundenen Handstücks 110 kann die Schnittstelleneinheit 124 einen USB-Verteiler (engl. Hub) enthalten, durch den das Handstück mit der Auswertevorrichtung 120 verbunden ist, ebenso kann die Stromversorgung in der Schnittstelleneinheit 124 zur direkten Stromversorgung des Handstücks 110 genutzt werden.

Um die intraorale Erfassung der Topographie der Oberfläche eines transluzenten, dentalen Objekts zu erleichtern ist es zweckmäßig, den vorderen Teil des Handstücks 110, die sogenannte Scanspitze 14, derart kompakt auszulegen, dass diese in die Mundhöhle eines Patienten eingeführt werden kann. Hierzu ist es zweckmäßig, wenn die Scanspitze 14 innerhalb einer Einführlänge L einen maximalen Durchmesser D nicht überschreitet. Beispielsweise sollte innerhalb der Einführlänge L von 7 cm der maximale Durchmesser D der Scanspitze 14 den Wert 4 cm nicht überschreiten.

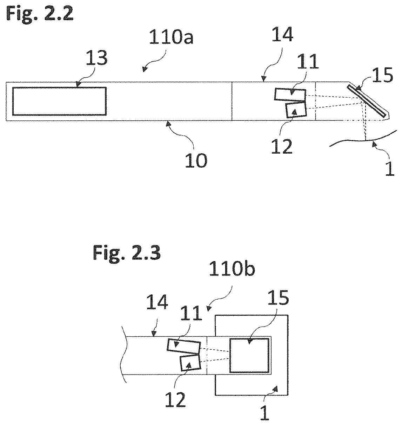

Figur 2.2 zeigt eine schematische Darstellung eines weiteren Ausführungsbeispiels eines (im Vergleich zu Figur 1) schlanken Handstücks 110a eines erfindungsgemäßen Intraoralscanners 100 in Seitenansicht, wobei die (miniaturisierte) Projektionseinrichtung 11 gemeinsam mit der Erfassungseinrichtung 12 in der Scanspitze 14 angeordnet ist.

Figur 2.3 zeigt eine schematische Darstellung eines weiteren Ausführungsbeispiels eines (im Vergleich zu Figur 1) schlanken Handstücks 110b eines erfindungsgemäßen Intraoralscanners 100 in Draufsicht. Abweichend vom Ausführungsbeispiel gemäß Figur 2.2 sind die Projektionseinrichtung 11 und die Erfassungseinrichtung 12 in der Draufsicht nebeneinander angeordnet. Auf diese Weise kann eine Scanspitze 14 mit möglichst niedrigem (flachem) Querschnitt ermöglicht werden, wodurch die Erreichbarkeit von tief in der Mundhöhle liegenden Regionen verbessert werden kann.

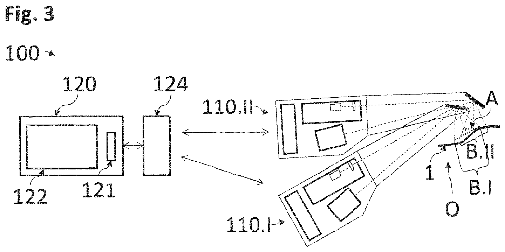

Anhand Figur 3 wird im Folgenden verdeutlicht, wie der Intraoralscanner 100 gemäß Figur 2.1 zum Erfassen der Topographie der Oberfläche 1 eines transluzenten, dentalen Objektes O verwendet werden kann. Zur Erhöhung der Übersichtlichkeit sind dabei in Figur 3 nicht alle in Figur 2.1 dargestellten Details des Handstücks zeichnerisch dargestellt.

Ein Bediener bewegt die Scanspitze 14 des Handstücks 110 entlang eines Bewegungspfads kontinuierlich über den zu erfassenden Teil der Oberfläche 1 des Objektes O. Dabei durchfährt das Handstück 110 zu einem ersten Zeitpunkt eine erste Position I (siehe Handstück 110.I), die das Projizieren des die drei Messmuster umfassenden Gesamtmessmusters auf einen ersten Teilbereich B.I der Oberfläche 1 ermöglicht (Positionieren des Handstücks in der ersten Position). Die Erfassungseinrichtung 12 ist dabei eingerichtet um ein erstes Bild, ein zweites Bild und ein drittes Bild des ersten Teilbereichs B.I bereitzustellen, wobei im ersten Bild das erste Messmuster, im zweiten Bild das zweite Messmuster und im dritten Bild das dritte Messmuster auf die Oberfläche 1 projiziert ist. Die drei Bilder können dabei entweder gleichzeitig oder sequentiell bereitgestellt (aufgenommen) werden. Die Belichtungsdauer (Integrationszeit) ist dabei zweckmäßigerweise möglichst kurz (insbesondere kleiner als 20 ms) zu wählen, um (durch die kontinuierliche Bewegung der Scanspitze während der Aufnahme/Bereitstellung der Bilder hervorgerufene) Bewegungsunschärfeeffekte zu minimieren.

Die drei in der ersten Position I bereitgestellten Bilder werden mittels drahtloser oder drahtgebundener Datenübertragung an die Auswertevorrichtung 120 übertragen. Die Rechnereinrichtung 121 ist dazu eingerichtet, mittels Triangulation unter Verwendung der drei in der ersten Position I bereitgestellten (aufgenommenen) Bilder eine erste Teiltopographie des ersten Teilbereichs B.I bereitzustellen.

Zu einem (dem ersten Zeitpunkt nachfolgenden) zweiten Zeitpunkt durchfährt das Handstück 110 geführt vom Bediener eine zweite Position II (siehe Handstück 110.II), die das Projizieren des die drei Messmuster umfassenden Gesamtmessmusters auf einen zweiten Teilbereich B.II der Oberfläche 1 ermöglicht (Positionieren des Handstücks in der zweiten Position), wobei der zweite Teilbereich B.II den ersten Teilbereich B.I teilweise oder ganz überlappt Die Erfassungseinrichtung 12 stellt ein erstes Bild, ein zweites Bild und ein drittes Bild des zweiten Teilbereichs B.II der Oberfläche 1 bereit (aufnehmen), wobei im ersten Bild das erste Messmuster, im zweiten Bild das zweite Messmuster und im dritten Bild das dritte Messmuster auf die Oberfläche 1 projiziert ist. Nachdem die in der zweiten Position II aufgenommenen drei Bilder ebenfalls an die Auswertevorrichtung 120 übertragen wurden, stellt die Rechnereinrichtung 121 mittels Triangulation unter Verwendung der drei in der zweiten Position II bereitgestellten (aufgenommenen) Bilder eine zweite Teiltopographie des zweiten Teilbereichs bereit.

Ferner ist die Rechnereinrichtung 121 dazu eingerichtet, durch teilweises Überlagern der ersten Teiltopographie (des ersten Teilbereichs B.I der Oberfläche) und der zweiten Teiltopographie (des zweiten Teilbereichs B.II der Oberfläche) eine (Gesamt-)Topographie des (den ersten und den zweiten Teilbereich der Oberfläche umfassenden) Teils der Oberfläche bereitzustellen.

Zusätzlich ist in Fig. 3 die sog. Arbeitsebene A dargestellt. Die Arbeitsebene A ist diejenige Ebene, auf die die optischen Komponenten der Projektionseinrichtung 11, Erfassungseinrichtung 12 und Beleuchtungsvorrichtung B für eine optimale Funktion ausgelegt sind. Die Auslegung betrifft beispielsweise die Fokusabstände von Projektionseinrichtung und Erfassungseinrichtung, die räumliche Lage von Projektionsachse und Erfassungsachse zueinander oder die Strahlformung der Beleuchtungseinrichtung.

Dementsprechend ist eine Oberfläche 1 in bestmöglicher Qualität erfassbar, wenn diese in der Arbeitsebene A liegt. Liegt sie wie in der Praxis unvermeidbar außerhalb der Arbeitsebene A, jedoch innerhalb des zulässigen Arbeitsbereichs, so ist sie dennoch mit anwendungsgerechter Qualität erfassbar, da die optischen Komponenten auf eine Beibehaltung der Funktion innerhalb des Arbeitsbereichs ausgelegt sind (beispielsweise bzgl. der Schärfentiefe von Projektions- und Erfassungsoptik). Eine anwendungsgerechte Lage der Arbeitsebene A wäre beispielsweise in einem Abstand von ca. 5 mm zur Oberfläche der Scanspitze (außerhalb der Scanspitze). Der Arbeitsbereich kann sich beispielsweise, ausgehend von der Arbeitsebene, in Richtung der Scanspitze bis zur Oberfläche der Scanspitze, und in die gegenüberliegende Richtung bis zu einem Abstand von ca. 20 mm erstrecken.

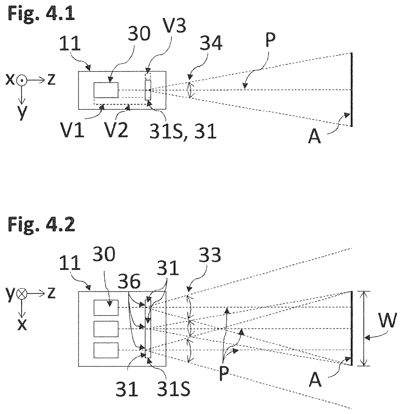

Anhand der Figuren 4.1 bis 4.5, die zwei Projektionseinrichtungen 11 von zwei verschiedenen Ausführungsbeispielen eines erfindungsgemäßen Intraoralscanners zeigen, soll im Folgenden detaillierter auf den Aufbau und die Funktionsweise von Projektionseinrichtungen 11 eingegangen werden.

Die Figuren 4.1 und 4.2 zeigen eine schematische Darstellung einer Projektionseinrichtung 11 eines Ausführungsbeispiels eines erfindungsgemäßen Intraoralscanners in Seitenansicht (Figur 4.1) bzw. in Draufsicht (Figur 4.2). Die Projektionseinrichtung 11 umfasst drei als Laserlichtquellen ausgeführte Lichtquellen 30 sowie drei diffraktive optische Elemente (DOEs) 31.

Die Lichtquellen 30 emittieren in Richtung der Projektionsachsen P auf die Arbeitsebene A fokussierte Lichtstrahlen, welche von den diffraktiven optischen Elementen 31 entsprechend der Musterdefinitionen selektiv mittels Lichtbeugung in eine Vielzahl von Strahlen geteilt und umgelenkt werden, wodurch drei fokussierte Messmuster (jeweils in Richtung der jeweiligen Projektionsachse P) projiziert werden.

Den Lichtquellen 30 ist dabei jeweils eines der drei diffraktiven optischen Elemente 31 zugeordnet, welche jeweils ein (darin hinterlegtes) zugeordnetes Messmuster erzeugt. Die lichtbeugende Wirkung der diffraktiven optischen Elemente 31, also die Erzeugung der Messmusters unter einfallendem Licht, wird dabei jeweils durch auf oder in dem diffraktiven optischen Element angeordnete Beugungsstrukturen 36 bewirkt, wobei die Beugungsstrukturen 36 im vorliegenden Ausführungsbeispiel als ebene Beugungsstrukturen (beugungsaktive Flächen) ausgeführt sind. Dabei sind gemäß dem in den Figuren 4.1 und 4.2 dargestellten Ausführungsbeispiel die drei ebenen Beugungsstrukturen 36 der diffraktiven optischen Elemente 31 in einer gemeinsamen Ebene auf einem gemeinsamen einteiligen (DOE-)Substrat 31S angeordnet. Die drei diffraktiven optischen Elemente 31 sind somit einteilig ausgeführt.

Die Projektion der Messmuster erfolgt unter jeweiligen Öffnungswinkeln 33, welche den minimalen Öffnungswinkeln entsprechen, bei denen ein durch die Projektionsweite W definierter Bereich auf der Arbeitsebene A gerade noch von allen Messmustern überdeckt wird.

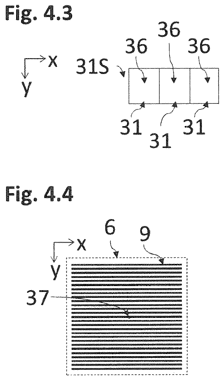

Fig. 4.3. zeigt drei einteilig auf einem gemeinsamen Substrat 31S ausgeführte diffraktive optische Elemente 31 mit jeweils einer für das jeweilige Messmuster individuellen Beugungsstruktur 36 (beugungsaktive Fläche) in Frontalansicht.

Die Projektionseinrichtung 11 gemäß den Figuren 4.1 und 4.2 umfasst ferner eine erste Vorrichtung V1 und eine zweite Vorrichtung V2 zur Justage sowie eine Vorrichtung zur Reduktion von Speckle V3.

Mittels der Vorrichtung zur Reduktion von Speckle V3 sind die diffraktiven optischen Elemente 31, 31S linear translatorisch bewegbar (maschinell betätigt bewegbar).

Gemäß einem weiteren vorteilhaften, nicht dargestellten Ausführungsbeispiel ist von der Lichtquelle 30 emittiertes Licht nicht auf die Arbeitsebene A fokussiert. Die Fokussierung auf die Arbeitsebene A wird stattdessen durch die DOEs 31, 31S hergestellt, wodurch eine entsprechende Optik (fokussierende optische Komponente) eingespart werden kann.

Figur 4.4 zeigt schematisch das durch eines der drei diffraktiven optischen Elemente 31 (gemäß den Figuren 4.1 bis 4.3) auf einer (in der Arbeitsebene A angeordneten) Oberfläche 1 erzeugte (unverzerrte) Messmuster 6, welches als Messelemente zueinander parallele Messlinien 9 aufweist und um den Messmustermittelpunkt 37 herum symmetrisch angeordnet ist. Im Rahmen der vorliegenden Anmeldung wird das auf die Oberfläche 1 projizierte (durch Lichtbeugung erzeugte) Messmuster auch als Messmusterprojektion, oder Projektion des Messmusters auf die Oberfläche bezeichnet.

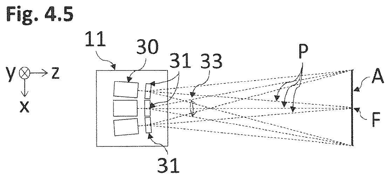

Figur 4.5 zeigt eine schematische Darstellung einer Projektionseinrichtung eines weiteren Ausführungsbeispiels eines erfindungsgemäßen Intraoralscanners in Draufsicht, umfassend drei Lichtquellen 30, jeweils ausgeführt als Laserlichtquellen mit Kollimationsoptiken, sowie drei diffraktive optische Elemente 31 (DOEs). Die Lichtquellen 30 sind derart ausgerichtet (orientiert), dass ihre Projektionsachsen P sich in einem gemeinsamen Punkt F auf der Arbeitsebene A schneiden. Des Weiteren sind die Foki der Lichtquellen 30 mittels der Kollimationsoptiken auf diesen gemeinsamen Punkt F auf der Arbeitsebene A eingestellt. Die Fokussierung kann aber alternativ auch vorteilhaft durch die DOEs 31 erfolgen, wodurch die Kollimationsoptiken einspart werden können. Die Beugungsstrukturen 36 (beugungsaktiven Flächen) der DOEs sind im Ausführungsbeispiel gemäß Figur 4.5 jeweils senkrecht zu den Projektionsachsen der Lichtquellen orientiert und als separate, einzelne DOEs ausgeführt, können alternativ aber auch eine gemeinsame Orientierung aufweisen und auf einem gemeinsamen, einteiligen DOE-Substrat (entsprechend 31S) angeordnet sein. Letztere Anordnung erfordert eine entsprechende Auslegung (Design) der beugungsaktiven Flächen 36 für schräg (d.h. nicht senkrecht für DOE-Oberfläche) einfallende Laserstrahlen. Ein Vorteil des in Figur 4.5 dargestellten Ausführungsbeispiels liegt darin, dass ein gemeinsam überdeckter Bereich der Messmusterprojektionen mit kleineren Öffnungswinkeln 33 der individuellen Musterprojektionen erreicht werden kann, als dies bei parallelen Projektionsachsen P der Fall wäre, was zu einer höheren Lichteffizienz führt.

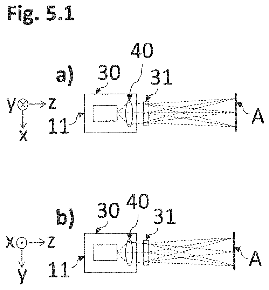

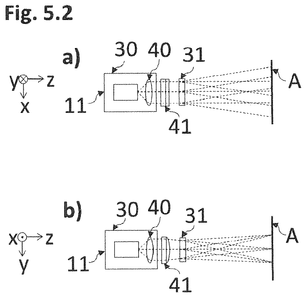

Figuren 5.1 und 5.2 zeigen schematische Ausschnitte jeweils einer Projektionseinrichtung 11 von erfindungsgemäßen Intraoralscannern 100. Aus Gründen der Übersichtlichkeit ist die Darstellung dabei jeweils beschränkt auf eine einzige Lichtquelle 30, ein einziges diffraktives optisches Element 31 und eine einzige Musterprojektion.

Figur 5.1a zeigt eine Lichtquelle 30 mit Sammellinsenoptik 40 (z.B. eine sphärische oder asphärischen Linse, optional Astigmatismus aufweisend), welche eingerichtet ist von der Lichtquelle 30 emittiertes Licht auf eine Arbeitsebene A zu fokussieren. Ein diffraktives optisches Element 31 erzeugt eine Messmusterprojektion (bzw. ein Messmuster) mittels Lichtbeugung. Die Darstellung von Figur 5.1a ist in Draufsicht; Figur 5.1b zeigt dasselbe Ausführungsbeispiel in Seitenansicht.

Bei einer diffraktiven Musterprojektion gibt es in der Regel einen Anteil des einfallenden Lichts, der nicht gebeugt wird - die sog. "nullte Ordnung", "0. Ordnung" oder "0. Beugungsordnung". In der Praxis versucht man durch Optimierung des DOE-Designs (d.h. die Ausgestaltung der beugungsaktiven Fläche) die nullte Ordnung zu minimieren, da sie nicht wie gewünscht zur Musterprojektion (bzw. zum Messmuster) beiträgt. In der Praxis kann die nullte Ordnung typischerweise auf einen Anteil von ca. 0,1-1% des einfallenden Lichts reduziert werden. Ein solcher Anteil führt meist dazu, dass die nullte Ordnung dennoch die höchste (Licht-) Intensität im projizierten Messmuster erzeugt. Als solche ist sie auch meist die Größe, die maßgeblich für die Augensicherheit der Projektionseinrichtung ist, und somit begrenzend für die maximal eingebrachte Lichtleistung unter Einhaltung einer Augensicherheitsklasse. Die nullte Ordnung ist meist in Form eines hellen Punkts in der Mitte des projizierten Messmusters anzutreffen. Da sie typischerweise nicht Teil der gewünschten Messmusterprojektion ist, ist sie auch meist eine Störquelle, z.B. bei einer Interpretation des projizierten Messmusters mittels Bildverarbeitung.

Eine vorteilhafte Abwandlung (Erweiterung) des Ausführungsbeispiels von Figur 5.1 mit dem Ziel einer reduzierten Intensität der nullten Beugungsordnung zeigt Figur 5.2, jeweils in Draufsicht (Figur 5.2a) und Seitenansicht (Figur 5.2b). Die Erweiterung besteht darin, dass die Sammellinsenoptik 40 in der Lichtquelle 30 emittiertes Licht nicht auf die Arbeitsebene A fokussiert, sondern vorzugsweise kollimiert. Andere Fokuseinstellungen als Kollimation sind hierbei möglich und abhängig von der Anwendung ebenfalls sinnvoll, vorteilhaft ist jedoch, wenn der Fokus nicht innerhalb des Arbeitsbereichs des Intraoralscanners liegt. Der von der Sammellinsenoptik geformte, nicht auf die Arbeitsebene A fokussierte Lichtstrahl trifft auf eine im Vergleich zum Ausführungsbeispiel von Figur 5.1 hinzugefügte astigmatische Optik (Linse) 41, welche Licht überwiegend in einer Dimension auf die Arbeitsebene fokussiert. Die astigmatische Optik 41 ist hier als Zylinderlinsenoptik ausgeführt, wobei die Zylinderachse parallel zur in Figur 5.2 dargestellten X-Achse liegt. Das in einer Dimension fokussierte Licht trifft auf ein DOE 31, welches eine (Mess-)Musterprojektion, und zwar insbesondere ein Messlinien umfassendes Messmuster, mittels Lichtbeugung erzeugt. Die Messlinien sind dabei parallel zur Zylinderachse der Zylinderlinsenoptik (sowie der X-Achse) orientiert. Im Ergebnis ist die Musterprojektion auf der Arbeitsebene A (welche senkrecht zur Z-Achse liegt) in Richtung der Y-Achse fokussiert, und in Richtung der X-Achse unfokussiert.

Die (Licht-)Intensität der nullten Ordnung wird durch dieses Ausführungsbeispiel wirksam reduziert, da das einfallende Licht nur in einer Richtung (Dimension) fokussiert ist, und in der anderen Richtung kollimiert oder defokussiert ist. Im Ergebnis erzeugt die nullte Ordnung keinen fokussierten Punkt hoher Lichtintensität im Messmustermittelpunkt der Musterprojektion, sondern eine Linie reduzierter Lichtintensität. Die (Licht-)Intensität der Linie ist dabei invers proportional zu ihrer Länge, welche wiederum proportional zur Defokussierung des einfallenden Lichts in der X-Achse ist. Da die Linie entlang der Messlinien erfindungsgemäßer Messmuster liegt, bewirkt sie selbst keine Defokussierung des Messmusters.

In einer Erweiterung dieses Ausführungsbeispiels auf mehrere Lichtquellen ist es vorteilhaft, eine astigmatische Optik gemeinsam für mehrere oder alle Lichtquellen zu nutzen. Die Lichtquellen sind dann linear in Richtung der Zylinderachse anzuordnen.

Anstatt einer Kombination aus Sammellinsenoptik und Zylinderlinse kann für jede Lichtquelle auch vorteilhaft eine einzelne Linse oder ein Linsensystem mit definiertem Astigmatismus verwendet werden. Analog zum in Fig. 5.2 beschriebenen Ausführungsbeispiel kann eine solche Projektionseinrichtung 11 die Intensität der nullten Ordnung wirksam reduzieren, indem statt eines Brennpunkts auf der Arbeitsebene A eine Brennlinie erzeugt wird, welche entlang der Richtung der Messlinien des Messmusters verläuft.

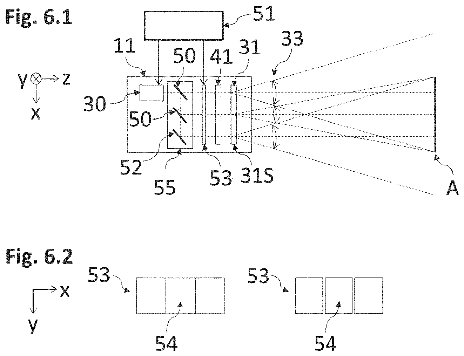

Figur 6.1 zeigt eine schematische Darstellung einer Projektionseinrichtung 11 eines weiteren Ausführungsbeispiels eines erfindungsgemäßen Intraoralscanners in Draufsicht, welche vorteilhaft die Projektion mehrerer Messmuster mittels Lichtbeugung in kosteneffizienter und kompakter Weise erlaubt. Eine Lichtquelle 30 emittiert einen Lichtstrahl, welcher von einer Kombination aus Strahlteilern 50 und Spiegeln 52 geteilt und umgelenkt wird.

In einer vorteilhaften Ausführung der Strahlteilung weisen alle drei ausgehenden Strahlen die gleiche photometrische Leistung auf. Im Falle von dreifacher Strahlteilung kann dies durch einen ersten Strahlteiler 50 mit ca. 33.3% Transmission und ca. 66.7% Reflexion, einem zweiten Strahlteiler 50 mit ca. 50.0% Transmission und Reflexion sowie einem Spiegel 52 erreicht werden.

Im Falle unterschiedlich auszuleuchtender Flächen der unterschiedlichen Messmuster (beispielsweise durch unterschiedliche Öffnungswinkel 33 oder durch eine unterschiedliche Anzahl von Messlinien in den Messmustern) kann besonders vorteilhaft die photometrische Leistung mittels der Teilungsverhältnisse der Strahlteiler so variiert werden, dass die Messlinien in allen Messmustern die gleiche Intensität aufweisen. Zur Teilung und Umlenkung können auch andere im Stand der Technik bekannte Verfahren wie Prismen oder diffraktive Strahlteilungsmethoden verwendet werden. Im dargestellten Ausführungsbeispiel wird der einfallende Strahl in drei ausgehende Strahlen geteilt; geringe oder höhere Teilungen sind ebenfalls mit entsprechenden, im Stand der Technik bekannten Mitteln realisierbar.

Die geteilten Strahlen der Lichtquelle treffen auf einen räumlichen Lichtmodulator 53, der beispielsweise als Flüssigkristalldisplay (LCD oder LCoS) ausgeführt ist. Figur 6.2 zeigt eine schematische Darstellung eines vorteilhaften räumlichen Lichtmodulators 53, der mehrere optisch modulierbare Segmente 54 enthält, wobei deren Anzahl mindestens der Anzahl der einfallenden Lichtstrahlen entspricht. Wie in Figur 6.2 dargestellt können diese optisch modulierbaren Segmente 54 auf einer einzelnen (einteiligen) Komponente angeordnet sein, oder aus mehreren separaten Komponenten ausgebildet sein. Eine Projektionssteuereinrichtung 51 schaltet (steuert) die Lichtemission der Lichtquelle 30 und den Zustand des räumlichen Lichtmodulators 53 für den jeweiligen Strahlengang, und somit die Beleuchtung eines jeweils zugeordneten DOEs 31. Die drei DOEs 31 sind hier vorteilhaft als ein einteiliges, gemeinsames DOE-Substrat 31S mit mehreren separaten Beugungsstrukturen 36 ausgeführt, wobei auch mehrere einzelne DOEs bzw. Substrate verwendet werden können.

Gemäß einer vorteilhaften Ausführung kann der von der Lichtquelle 30 emittierte Lichtstrahl im Wesentlichen kollimiert sein (beispielsweise mittels einer nicht dargestellten Sammellinsenoptik), d.h. die emittierten Lichtstrahlen weisen eine minimierte Divergenz auf. Die kollimierten Lichtstrahlen treffen jeweils auf eine zwischen Strahlteiler 50 respektive Spiegel 52 und DOE 31 angeordnete fokussierende Optik, welche einfallende Lichtstrahlen auf die Arbeitsebene A fokussiert. Besonders vorteilhaft ist dabei eine fokussierende Optik, die einen Astigmatismus aufweist, der einfallende Stahlen in Richtung der Y-Achse auf die Arbeitsebene A fokussiert, und in Richtung der X-Achse nicht auf die Arbeitsebene A fokussiert. Im Ergebnis sind die projizierten Messlinien (welche parallel zur X-Achse orientiert sind) in der Arbeitsebene A fokussiert, die nullte Beugungsordnung der DOEs 31 erscheint jedoch durch die Defokussierung in der X-Achse nicht als Punkt, sondern als Linie und ist somit intensitätsreduziert. Die Intensitätsreduktion ist vorteilhaft im Sinne der Lasersicherheit und der Projektionsqualität der Messmuster. Die fokussierende Optik kann wie in Fig. 6.1 dargestellt vorteilhaft als eine einteilige astigmatische Optik 41 aufgeführt sein (beispielsweise eine Zylinderlinse, deren Zylinderachse parallel zur X-Achse verläuft), jedoch sind auch einzelne astigmatische Optiken oder einzelne nicht-astigmatische Optiken möglich. Ebenso können anstelle der fokussierenden Optik(en) lichtfokussierend wirksame DOEs eingesetzt werden.

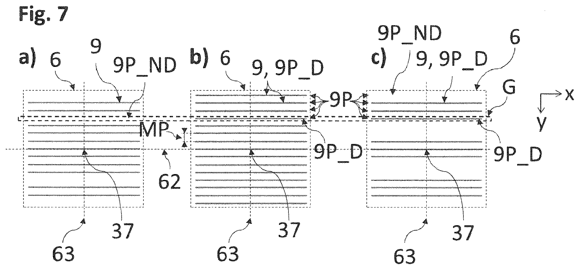

Figur 7 zeigt Darstellungen von Messmustern eines Ausführungsbeispiels eines erfindungsgemäßen Intraoralscanners, sowie deren räumliche Orientierung und Symmetrie. Die drei dargestellten Messmuster 6 bilden ein Gesamtmessmuster aus und umfassen jeweils eine Mehrzahl von Messlinien 9, welche parallel zur X-Achse verlaufen. Figur 7a stellt dabei ein erstes Messmuster, Figur 7b ein zweites Messmuster und Figur 7c ein drittes Messmuster (der drei Messmuster 9) dar. Derart unverzerrt würden die auf eine Oberfläche 1 projizierten Messmuster 6 theoretisch dann erscheinen, wenn sie jeweils aus einer mit der jeweiligen Projektionsachse P zusammenfallenden Erfassungsachse R betrachtet würden (was in der vorliegenden Erfindung nicht der Fall ist). Das hier dargestellte Koordinatensystem entspricht dem Koordinatensystem vorhergehender Figuren.

Die Messlinien 9 sind dabei auf möglichen Messlinienpositionen 9P angeordnet. Die möglichen Messlinienpositionen 9P entsprechen einem Gitter mit konstanter Messlinienperiode MP. Eine auf einer möglichen Messlinienposition 9P dargestellte Messlinie 9 wird auch als dargestellte Messlinie 9P_D bezeichnet. Eine mögliche Messlinienposition 9P auf der keine Messlinie angeordnet ist, wird als nicht-dargestellte Messlinie 9P_ND bezeichnet. Dargestellte Messlinien 9P_D und nicht-dargestellte Messlinien 9P_ND, die einer gemeinsamen möglichen Messlinienposition 9P zugeordnet sind, bilden eine Gruppe G von Messlinien aus. Die Kombination aus dargestellten Messlinien 9P_D und nicht-dargestellten Messlinien 9P_ND innerhalb einer Gruppe G entspricht einem (der möglichen Messlinienposition 9P) zugeordnetem Symbol. Aus Gründen der Übersichtlichkeit sind in Figur 7 nicht alle abgebildeten, sondern nur ausgewählte Messlinien 9, mögliche Messlinienpositionen 9P, dargestellte Messlinien 9P_D, nicht-dargestellte Messlinien 9P_ND bzw. Gruppen G mit einem entsprechenden Bezugszeichen versehen.

Die Messmuster 6 sind punktsymmetrisch um einen jeweiligen Messmustermittelpunkt 37, und somit mittels binärer DOEs erzeugbar. Zur Verdeutlichung der Symmetrie sind eine horizontale Symmetrieachse 62 und vertikale Symmetrieachsen 63 in Figur 7 eingezeichnet. Die Messmuster 6 sind vorzugsweise so gestaltet, dass jeweils der Messmustermittelpunkt 37 und somit die nullte Beugungsordnung auf einer Messlinie 9 liegt. Würde sie nicht auf einer Messlinie liegen, würde sie je nach Ausführungsbeispiel einen Punkt oder eine Linie in der Mitte der Messmuster erzeugen, die nicht Teil der gewünschten Musterprojektion wären.

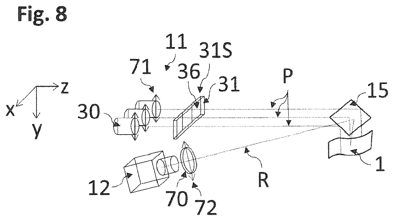

Figur 8 zeigt eine schematische Darstellung eines Ausführungsbeispiels eines erfindungsgemäßen Intraoralscanners, umfassend eine Projektionseinrichtung 11 und eine Erfassungseinrichtung 12, einem Umlenkspiegel 15, und einen transmissiven linearen Polarisationsfilter 70 mit einer Polarisationsrichtung der Erfassung gemäß dem Pfeil 72. Die Projektionseinrichtung 11 weist drei als Laserlichtquellen ausgeführte Lichtquellen 30 mit einer natürlichen linearen Polarisationsrichtung der Lichtemission gemäß der Pfeile 71 des emittierten Lichts, und drei als ein einteiliges DOE-Substrat 31S ausgeführte diffraktive optische Elemente (DOE) 31 mit jeweils einer Beugungsstruktur (bzw. beugungsaktiven Fläche) 36 auf. Die Lichtquellen 30 beleuchten sequentiell oder zeitgleich die ihnen zugeordneten diffraktiven optischen Elemente 31 bzw. Beugungsstrukturen 36 und erzeugen mittels Lichtbeugung jeweilige (dort hinterlegte) Messmuster 6 einer strukturierten Beleuchtung. Die Messmuster 6 werden durch den Umlenkspiegel 15 auf eine zu erfassende Oberfläche 1 eines Objekts reflektiert. Die Erfassungseinrichtung 12 erfasst die auf die Oberfläche 1 projizierten Messmuster 6 über den Umlenkspiegel 15. Die Lichtquellen 30 und der transmissive Polarisationsfilter 70 sind so zueinander ausgerichtet, dass sie eine gemeinsame Polarisationsrichtung aufweisen. Die Ausrichtung der Lichtquellen 30 erfolgt dabei rotatorisch um die jeweiligen Projektionsachsen P; die Ausrichtung des Polarisationsfilters 70 erfolgt rotatorisch um die Erfassungsachse R. Im Falle von Laserlichtquellen, insbesondere Laserdioden, ist die Polarisationsrichtung in der Regel mit Gehäusemerkmalen korreliert. Dementsprechend kann die Montageeinrichtung der Lichtquellen so gestaltet sein, dass sie nur in der korrekten Polarisationsrichtung bestückbar ist. Die somit sichergestellte gemeinsame Polarisationsrichtung der Lichtquellen bleibt bei der Projektion der strukturierten Beleuchtung mittels Lichtbeugung erhalten, ebenso bei der zweimaligen Umlenkung (Projektion und Erfassung) durch den Umlenkspiegel 15.

Die in Figur 8 dargestellte gemeinsame Polarisationsrichtung der Lichtquellen 30 und des Polarisationsfilters 70 ist beispielhaft gegeben. Entscheidend für eine wirksame Ausführung ist, dass die Komponenten eine gemeinsame Polarisationsrichtung aufweisen. Der dargestellte Polarisationsfilter 70 ist als transmissiver Polarisationsfilter ausgeführt.

## Patentansprüche

1. Verfahren zum Erfassen der Topographie der Oberfläche (1) eines transluzenten, insbesondere dentalen, Objektes (O) mit den Schritten:
- Erfassen einer ersten Teiltopographie eines ersten Teilbereichs (B.I) der Oberfläche (1) und einer zweiten Teiltopographie eines, den ersten Teilbereich (B.I) zumindest teilweise überlappenden, zweiten Teilbereichs (B.II) der Oberfläche (1), wobei das Erfassen der Teiltopographien der Teilbereiche (B.I, B.II) der Oberfläche (1) jeweils erfolgt durch
- Projizieren eines Gesamtmessmusters auf den jeweiligen Teilbereich (B.I, B.II) der Oberfläche (1) des transluzenten Objektes (O) mittels einer Projektionseinrichtung (11), wobei
- die Projektionseinrichtung (11) mindestens eine Lichtquelle (30) und mindestens zwei diffraktive optische Elemente (31) umfasst,
- das Gesamtmessmuster mindestens zwei verschiedene Messmuster (6) umfasst,
- die Messmuster (6) auf die Oberfläche (1) projizierbar sind und jeweils eine Mehrzahl von zueinander parallelen Messlinien (9) aufweisen,
- den Messmustern (6) jeweils eines der diffraktiven optischen Elemente (31) zugeordnet ist, mittels dessen die Messlinien (9) durch Lichtbeugung erzeugbar sind,
- die mindestens eine Lichtquelle (30) die diffraktiven optischen Elemente (31) mit linear in einer Polarisationsrichtung (71) polarisiertem Licht beleuchtet, und zwischen der Oberfläche (1) und der Erfassungseinrichtung (12) ein linearer Polarisationsfilter (70) angeordnet ist, dessen Durchlassrichtung (72) mit der Polarisationsrichtung (71) übereinstimmt, und
- Bereitstellen eines ersten Bildes und eines zweiten Bildes des jeweiligen Teilbereichs (B.I, B.II) der Oberfläche (1) mittels einer Erfassungseinrichtung (12), wobei im ersten Bild ein erstes der mindestens zwei Messmuster (6) auf den jeweiligen Teilbereich (B.I, B.II) der Oberfläche (1) projiziert ist und im zweiten Bild ein zweites der mindestens zwei Messmuster (6) auf den jeweiligen Teilbereich (B.I, B.II) der Oberfläche (1) projiziert ist, und
- Erfassen der jeweiligen Teiltopographie des jeweiligen Teilbereichs (B.I, B.II) der Oberfläche (1) jeweils mittels Triangulation unter Verwendung des jeweiligen ersten Bildes und/oder des jeweiligen zweiten Bildes,
- Erfassen der Topographie der Oberfläche (1) durch zumindest teilweises Überlagern der ersten Teiltopographie und der zweiten Teiltopographie der Oberfläche (1).

2. Verfahren nach Anspruch 1, **dadurch gekennzeichnet, dass** der Polarisationsfilter (70) nur im Emissionsspektrum der mindestens einen Lichtquelle (30) polarisierend wirksam und im verbleibenden Emissionsspektrum neutral ist.

3. Verfahren nach einem der vorhergehenden Ansprüche, **dadurch gekennzeichnet, dass** das Projizieren des Gesamtmessmusters auf den jeweiligen Teilbereich (B.I, B.II) der Oberfläche (1) des transluzenten Objektes (O) umfasst:
Reduzieren von Speckle mittels einer Vorrichtung zur Reduktion von Speckle (V3), optional durch, insbesondere translatorisches, Bewegen mindestens eines der diffraktiven optischen Elemente (31) während des Projizierens des Gesamtmessmusters.

4. Verfahren nach einem der vorhergehenden Ansprüche, **dadurch gekennzeichnet, dass** die Messlinien (9) mittels algebraischer Flächen kalibriert sind und optional die Triangulation unter Verwendung dieser algebraischen Flächen erfolgt.

5. Verfahren nach einem der vorhergehenden Ansprüche, **dadurch gekennzeichnet, dass** das Verfahren ferner umfasst:
Erzeugen einer unstrukturierten Beleuchtung auf der Oberfläche (1) des Objekts (O) mit gleichmäßig verteilter Intensität mittels einer Beleuchtungsvorrichtung (B), wobei optional die unstrukturierte Beleuchtung rotes, grünes, blaues, weißes, ultraviolettes, nah-infrarotes oder infrarotes Licht oder eine Kombination hiervon umfasst.

6. Verfahren nach einem der vorhergehenden Ansprüche, **dadurch gekennzeichnet,**
**dass** das erste Messmuster (6) in einem ersten Wellenlängenspektrum und das zweite Messmuster (6) in einem zweiten Wellenlängenspektrum, insbesondere gleichzeitig, projiziert sind, und
die Erfassungseinrichtung (12) derart spektralselektiv eingerichtet ist, dass das erste Bild mittels überwiegender Erfassung von Licht des ersten Wellenlängenspektrums und das zweite Bild mittels überwiegender Erfassung von Licht des zweiten Wellenlängenspektrums bereitgestellt wird.

7. Verfahren nach einem der vorhergehenden Ansprüche, **dadurch gekennzeichnet,**
**dass** das erste Messmuster (6) in einem ersten Polarisationszustand oder in einer ersten Polarisationsrichtung und das zweite Messmuster (6) in einem zweiten Polarisationszustand oder in einer zweiten Polarisationsrichtung, insbesondere gleichzeitig, projiziert sind, und
die Erfassungseinrichtung (12) derart polarisationsselektiv oder polarisationssensitiv eingerichtet ist, dass das erste Bild mittels überwiegender Erfassung von Licht der ersten Polarisationsrichtung oder des ersten Polarisationszustands und das zweite Bild mittels überwiegender Erfassung von Licht der zweiten Polarisationsrichtung oder des zweiten Polarisationszustands bereitgestellt wird.

8. Intraoralscanner (100) zum Erfassen der Topographie der Oberfläche (1) eines transluzenten, insbesondere dentalen, Objektes (O) in einem Verfahren gemäß einem der vorhergehenden Ansprüche, umfassend eine Projektionseinrichtung (11), eine Erfassungseinrichtung (12) und eine mit der Projektionseinrichtung (11) und der Erfassungseinrichtung (12) wirkverbundene Rechnereinrichtung (121),
- wobei die Projektionseinrichtung (11) mindestens eine Lichtquelle (30) und mindestens zwei diffraktive optische Elemente (31) umfasst und eingerichtet ist ein Gesamtmessmuster auf Teilbereiche (B.I, B.II) der Oberfläche (1) des transluzenten Objektes (O) zu projizieren,
das Gesamtmessmuster mindestens zwei verschiedene Messmuster (6) umfasst,
die Messmuster (6) jeweils auf die Oberfläche (1) projizierbar sind und jeweils eine Mehrzahl von zueinander parallelen Messlinien (9) aufweisen,
den Messmustern (6) jeweils eines der diffraktiven optischen Elemente (31) zugeordnet ist, mittels denen die Messlinien (9) durch Lichtbeugung erzeugbar sind, und
die mindestens eine Lichtquelle (30) die diffraktiven optischen Elemente (31) mit linear in einer Polarisationsrichtung (71) polarisiertem Licht beleuchtet, und zwischen der Oberfläche (1) und der Erfassungseinrichtung (12) ein linearer Polarisationsfilter (70) angeordnet ist, dessen Durchlassrichtung (72) mit der Polarisationsrichtung (71) übereinstimmt,
- wobei die Erfassungseinrichtung (12) eingerichtet ist ein erstes Bild und ein zweites Bild des jeweiligen Teilbereichs (B.I, B.II) der Oberfläche (1) bereitzustellen, und im ersten Bild ein erstes der mindestens zwei Messmuster (6) auf den jeweiligen Teilbereich (B.I, B.II) der Oberfläche (1) projiziert ist und im zweiten Bild ein zweites der mindestens zwei Messmuster (6) auf den jeweiligen Teilbereich (B.I, B.II) der Oberfläche (1) projiziert ist,
- wobei die Rechnereinrichtung (121) eingerichtet ist
eine erste Teiltopographie des ersten Teilbereichs (B.I) der Oberfläche (1) und eine zweite Teiltopographie des zweiten Teilbereichs (B.II) der Oberfläche (1) jeweils mittels Triangulation unter Verwendung des jeweiligen ersten Bildes und/oder des jeweiligen zweiten Bildes zu erfassen, und
die Topographie der Oberfläche (1) durch zumindest teilweises Überlagern der ersten Teiltopographie und der zweiten Teiltopographie der Oberfläche (1) zu erfassen.

9. Intraoralscanner (100) nach Anspruch 8, **dadurch gekennzeichnet, dass** die diffraktiven optischen Elemente (31) auf einem gemeinsamen Substrat (31S) angeordnet sind, wobei insbesondere die Beugungsstrukturen (36) der diffraktiven optischen Elemente (31) in einer gemeinsamen Ebene angeordnet sind.

10. Intraoralscanner (100) nach einem der Ansprüche 8 oder 9, **dadurch gekennzeichnet, dass** mindestens eines der Messmuster (6) punktsymmetrisch zu einem Messmustermittelpunkt (37) ausgebildet ist und optional das zugeordnete diffraktive optische Element (31) als binäres diffraktives optisches Element ausgeführt ist.

11. Intraoralscanner (100) nach einem der Ansprüche 8 bis 10, **dadurch gekennzeichnet, dass** die Messmuster (6) jeweils in Richtung einer Projektionsachse (P) auf die Oberfläche (1) projizierbar sind und die Projektionsachsen (P) in einer gemeinsamen Projektionsachsenebene angeordnet sind, die zur Richtung der Messlinien (9) parallel ist und dass optional mindestens ein Messmustermittelpunkt (37) eines Messmusters (6) in der gemeinsamen Projektionsachsenebene angeordnet ist.

12. Intraoralscanner (100) nach einem der Ansprüche 8 bis 11, **dadurch gekennzeichnet, dass** die Projektionseinrichtung (11) eine erste Vorrichtung zur Justage (V1) einer Lage mindestens einer Projektionsachse (P) und/oder eine zweite Vorrichtung zur Justage (V2) umfasst, wobei mittels der zweiten Vorrichtung zur Justage (V2)
- ein Abstand zwischen einem der diffraktiven optischen Elemente (31) und der mindestens einen Lichtquelle (30) änderbar ist oder
- ein Abstand zwischen einer Linse und der mindestens einen Lichtquelle (30) änderbar ist.

13. Intraoralscanner (100) nach einem der Ansprüche 8 bis 12, **dadurch gekennzeichnet, dass** die Projektion der Messmuster (6) unter unterschiedlichen Öffnungswinkeln (33) erfolgt.

14. Intraoralscanner (100) nach einem der Ansprüche 8 bis 13, **dadurch gekennzeichnet, dass** die Projektionseinrichtung (11) eine Vorrichtung zur Reduktion von Speckle (V3) umfasst und optional mindestens eines der diffraktiven optischen Elemente (31), insbesondere translatorisch, während des Projizierens des Gesamtmessmusters bewegbar ist.

15. Intraoralscanner (100) nach einem der Ansprüche 8 bis 14, **dadurch gekennzeichnet, dass** die Projektionseinrichtung (11) mindestens eine astigmatische Linse umfasst.

16. Intraoralscanner (100) nach einem der Ansprüche 8 bis 15, **dadurch gekennzeichnet, dass** mindestens eines der diffraktiven optischen Elemente (31) lichtfokussierend wirksam ist.

17. Intraoralscanner (100) nach einem der Ansprüche 8 bis 16, **dadurch gekennzeichnet, dass** die Projektionseinrichtung (11) mindestens einen Strahlteiler (50) und mindestens einen räumlichen Lichtmodulator (53) umfasst.

18. Intraoralscanner (100) nach einem der Ansprüche 8 bis 17, **dadurch gekennzeichnet, dass** die Projektionseinrichtung (11) eine Beleuchtungsvorrichtung (B) zur Erzeugung einer unstrukturierten Beleuchtung auf der Oberfläche (1) des Objekts (O) mit gleichmäßig verteilter Intensität umfasst und optional die unstrukturierte Beleuchtung rotes, grünes, blaues, weißes, ultraviolettes, nah-infrarotes oder infrarotes Licht oder eine Kombination hiervon umfasst.

19. Intraoralscanner (100) nach einem der Ansprüche 8 bis 18, **dadurch gekennzeichnet, dass** die mindestens eine Lichtquelle (30) als eine Laserlichtquelle ausgeführt ist,
und die Laserlichtquelle in einer ersten Dimension einzelmodig und in einer zweiten Dimension multimodig ist, wobei die zweite Dimension parallel oder senkrecht zur Richtung der Messlinien (9) ausgerichtet ist,
und/oder mindestens ein Betriebsparameter der Laserlichtquelle geregelt und/oder der mindestens eine Betriebsparameter mit einer Frequenz im Bereich von 1-1000 MHz modulierbar ist.

## Claims

1. A method for recording the topography of the surface (1) of a translucent, in particular dental, object (O) comprising the steps of:
- recording a first partial topography of a first partial area (B.I) of the surface (1) and a second partial topography of the second partial area (B.II) of the surface (1) overlapping at least partially the first partial area (B.I), wherein the recording of the partial areas (B.I, B.II) of the surface (1) is performed, respectively, by
- by projecting an overall measuring pattern of the respective partial area (B.I, B.II) of the surface (1) of the translucent object (O) by means of a projection system (11), wherein
- the projection system (11) includes at least one light source (30) and at least two diffractive optical elements (31),
- the overall measuring pattern comprises at least two different measuring patterns (6),
- the measuring patterns (6) are projectable onto the surface (1) and respectively comprise a plurality of measuring lines (9) parallel to each other,
- the measuring patterns (6) each have one of the diffractive optical elements (31) assigned to them, by means of which the measuring lines (9) can be generated through light diffraction,
- the at least one light source (30) illuminates the diffractive optical elements (31) with light linearly polarised in a polarisation direction (71), and a linear polarisation filter (70) is arranged between the surface (1) and the recording system (12), whose direction of passage (72) coincides with the polarisation direction (71), and
- providing a first image and a second image of the respective partial area (B.I, B.II) of the surface (1) by means of a recording system (12), wherein in the first image a first of the at least two measuring patterns (6) is projected onto the respective partial area (B.I, B.II) of the surface (1) and in the second image a second of the at least two measuring patterns (6) is projected onto the respective partial area (B.I, B.II) of the surface (1), and
- recording the respective topography of the respective partial area (B.I, B.II) of the surface (1) respectively by means of triangulation using the respective first image and/or the respective second image,
- recording the topography of the surface (1) by at least partially superimposing the first partial topography and the second partial topography of the surface (1).

2. The method according to claim 1, **characterised in that** polarisation filter (70) is polarisingly effective only in the emission spectrum of the at least one light source (30) and is neutral in the remaining emission spectrum.

3. The method according to one of the preceding claims, **characterised in that** projecting the overall measuring pattern onto the respective partial area (B.I, B.II) of the surface (1) of the translucent object (O) includes:
Reducing speckle by means of at least one device for reducing speckle (V3) by optionally moving at least one of the diffractive optical elements (31) in a translatory manner while projecting the overall measuring pattern.

4. The method according to one of the preceding claims, **characterised in that** the measuring lines (9) are calibrated by means of algebraic surfaces and triangulation is performed optionally using these algebraic surfaces.

5. The method according to one of the preceding claims, **characterised in that** the method further includes:
generating an unstructured illumination on the surface (1) of the object (O) with uniformly distributed intensity by means of an illumination device (B), wherein optionally the unstructured illumination includes red, green, blue, white, ultraviolet, near-infrared or infrared light or a combination thereof.

6. The method according to one of the preceding claims, **characterised in that** the first measuring pattern (6) is projected in a first wavelength spectrum and the second measuring pattern (6) is projected in a second wavelength spectrum, in particular simultaneously, and
the recording system (12) is arranged spectrally selectively such that the first image is provided by means of predominantly recording light of the first wavelength spectrum and the second image is recorded by means of predominantly recording light of the second wavelength spectrum.

7. The method according to one of the preceding claims, **characterised in that** the first measuring pattern (6) is projected in a first polarisation state or in a first polarisation direction and the second measuring pattern (6) is projected in a second polarisation state or in a second polarisation direction, in particular simultaneously, and
the recording system (12) is arranged polarisation-selectively or polarisation-sensitively such that the first image is provided by means of predominantly recording light of the first polarisation direction or the first polarisation state and the second image is provided by means of predominantly recording light of the second polarisation direction or the second polarisation state.

8. An intraoral scanner (100) for recording the topography of the surface (1) of a translucent, in particular dental, object (O) in a method according to one of the preceding claims, including a projection system (11), a recording system (12) and a computer system (121) operatively connected to the projection system (11) and the recording system (12),
- wherein the projection system (11) includes at least one light source (30) and at least two diffractive optical elements (31) and is arranged to project an overall measuring pattern onto partial areas (B.I, B.II) of the surface (1) of the translucent object (O),
the overall measuring pattern comprises at least two different measuring patterns (6),
the measuring patterns (6) are each projectable onto the surface (1) and each comprise a plurality of measuring lines (9) parallel to each other,
the measuring patterns (6) each have one of the diffractive optical elements (31) assigned to them, by means of which the measuring lines (9) can be generated by light diffraction, and
the at least one light source (30) illuminates the diffractive optical elements (31) with light linearly polarised in a polarisation direction (71), and the recording system (12) has a linear polarisation filter (70) assigned to it between the surface (1) and the recording system (12), the direction of diffraction (72) of which coincides with the polarisation direction (71),
- wherein the recording system (12) is arranged to provide a first image and a second image of the respective partial area (B.I, B.II) of the surface (1), and in the first image a first of the at least two measuring patterns (6) is projected onto the respective partial area (B.I, B.II) of the surface (1), and in the second image a second of the at least two measuring patterns (6) is projected onto the respective partial area (B.I, B.II) of the surface (1),
- wherein the computer system (121) is arranged
to record a first partial topography of the first partial area (B.I) of the surface (1) and the second partial topography of the second partial area (B.II) of the surface (1) by means of triangulation respectively, using the respective first image and/or the respective second image, and
to record the topography of the surface (1) by at least partially superimposing the first partial topography and the second partial topography of the surface (1).

9. The intraoral scanner (100) according to claim 8, **characterised in that** the diffractive optical elements (31) are arranged on a common substrate (31S), wherein in particular the diffraction structures (36) of the diffractive optical elements (31) are arranged in a common plane.

10. The intraoral scanner (100) according to one of claims 8 or 9, **characterised in that** at least one of the measuring patterns (6) is formed point-symmetrically relative to a measuring pattern centre (37) and the associated diffractive optical element (31) is optionally realised as a binary diffractive optical element.

11. The intraoral scanner (100) according to one of claims 8 to 10, **characterised in that** the measuring patterns (6) can each be projected in direction of a projection axis (P) onto the surface (1) and the projection axes (P) are arranged in a common projection axis plane, which is parallel to the direction of the measuring lines (9), and **in that** optionally at least one measuring pattern centre (37) of a measuring pattern (6) is arranged in a common projection axis plane.

12. The intraoral scanner (100) according to one of claims 8 to 11, **characterised in that** the projection system (11) includes a first device for the adjustment (V1) of a position of at least one projection axis (P) and/or a second device for adjustment (V2), wherein by means of the second device for adjustment (V2)
- a distance between one of the diffractive optical elements (31) and the at least one light source (30) can be changed or
- a distance between a lens and the at least one light source (30) can be changed.

13. The intraoral scanner (100) according to one of claims 8 to 12, **characterised in that** projection of the measuring patterns (6) is performed at different opening angles (33).

14. The intraoral scanner (100) according to one of claims 8 to 13, **characterised in that** the projection system (11) includes a device for reducing speckle (V3) and optionally at least one of the diffractive optical elements (31) is movable, in particular translatorily, during projection of the overall measuring pattern.

15. The intraoral scanner (100) according to one of claims 8 to 14, **characterised in that** the projection system (11) includes at least one astigmatic lens.

16. The intraoral scanner (100) according to one of claims 8 to 15, **characterised in that** at least one of the diffractive optical elements (31) is effective in a light-focussing manner.

17. The intraoral scanner (100) according to one of claims 8 to 16, **characterised in that** the projection system (11) includes at least one beam splitter (50) and at least one spatial light modulator (53).

18. The intraoral scanner (100) according to one of claims 8 to 17, **characterised in that** the projection system (11) includes an illumination device (B) for generating an unstructured illumination on the surface (1) of the object (O) with uniformly distributed intensity and the unstructured illumination optionally includes red, green, blue, white, ultraviolet, near-infrared or infrared light or a combination thereof.

19. The intraoral scanner (100) according to one of claims 8 to 18, **characterised in that** the at least one light source (30) is implemented as a laser light source,
and that in a first dimension the laser light source is single-mode and in a second dimension is multimode, wherein the second dimension is oriented parallel to or vertically to the direction of the measuring lines (9),
and/or at least one operating parameter of the laser light source is controlled and/or the at least one operating parameter can be modulated at a frequency in the range from 1-1000 MHz.

## Revendications

1. Procédé de détection de la topographie de la surface (1) d'un objet (O) translucide, notamment dentaire, comportant les étapes consistant à :
- détecter une première topographie partielle d'une première zone partielle (B.I) de la surface (1) et d'une deuxième topographie partielle d'une première zone partielle (B.I) chevauchant au moins partiellement la deuxième zone partielle (B. II) de la surface (1), dans lequel la détection des topographies partielles des sous-zones (B.I, B.II) de la surface (1) a lieu respectivement
- en projetant un motif de mesure global sur la zone partielle respective (B.I, B.II) de la surface (1) de l'objet translucide (0) au moyen d'un dispositif de projection (11), dans lequel
- le dispositif de projection (11) comporte au moins une source lumineuse (30) et au moins deux éléments optiques diffractifs (31),
- le motif de mesure total comprend au moins deux motifs de mesure différents (6),
- le motif de mesure (6) peut être projeté sur la surface (1) et présentent respectivement une pluralité de lignes de mesure mutuellement parallèles (9),
- l'un des éléments optiques diffractifs (31) est associé au motif de mesure (6), au moyen duquel les lignes de mesure (9) peuvent être générées par diffraction de la lumière,
- la au moins une source lumineuse (30) illumine les éléments optiques diffractifs (31) avec une lumière polarisée linéairement dans une direction de polarisation (71), et entre la surface (1) et le dispositif de détection (12) est agencé un filtre de polarisation linéaire (70), dont la direction de transmission (72) correspond à la direction de polarisation (71), et
- fournissant une première image et une deuxième image de la sous-zone respective (B.I, B.II) de la surface (1) au moyen d'un dispositif de détection (12), dans lequel dans la première image un premier des au moins deux motifs de mesure (6) est projeté sur la zone partielle respective (B.I, B.II) de la surface (1) et dans la deuxième image un deuxième des au moins deux modèles de mesure (6) est projeté sur la zone partielle respective (B.I, B.II) de la surface (1), et
- détectant la topographie partielle respective de la surface partielle (B.I, B.II) de la surface (1) respectivement au moyen d'une triangulation à l'aide de la première image respective et/ou de la deuxième image respective,
- détecter la topographie de la surface (1) par superposition au moins partielle de la première topographie partielle et de la deuxième topographie partielle de la surface (1).

2. Procédé selon la revendication 1, **caractérisé en ce que** le filtre de polarisation (70) polarisant agit uniquement dans le spectre d'émission de la au moins une source lumineuse (30) et le spectre d'émission restant est neutre.

3. Procédé selon une quelconque des revendications précédentes, **caractérisé en ce que** la projection du motif de mesure global sur la zone partielle respective (BI, B.II) de la surface (1) de l'objet translucide (O) comprend de :
réduire du chatoiement au moyen d'un dispositif de réduction du chatoiement (V3), éventuellement en déplaçant, notamment en translation, au moins un des éléments optiques diffractifs (31) lors de la projection du motif de mesure global.

4. Procédé selon une quelconque des revendications précédentes, **caractérisé en ce que** les lignes de mesure (9) sont calibrées à l'aide de surfaces algébriques et éventuellement la triangulation s'effectue à l'aide de ces surfaces algébriques.

5. Procédé selon une quelconque des revendications précédentes, **caractérisé en ce que** le procédé comprend en outre de :
créer un éclairage déstructuré en surface (1) de l'objet (O) avec une intensité uniformément répartie en utilisant un dispositif d'éclairage (B), dans lequel éventuellement l'éclairage non structuré comprend une lumière rouge, verte, bleue, blanche, ultraviolette, proche infrarouge ou infrarouge ou une combinaison de celles-ci.

6. Procédé selon une quelconque des revendications précédentes, **caractérisé en ce que** le premier motif de mesure (6) est projeté dans un premier spectre de longueurs d'onde et le deuxième motif de mesure (6) est projeté dans un deuxième spectre de longueurs d'onde, en particulier simultanément, et
le dispositif de détection (12) est agencé d'une manière spectralement sélective telle que la première image au moyen d'une superposition capturant la lumière du premier spectre de longueur d'onde et la deuxième image soit fournie en capturant principalement la lumière du deuxième spectre de longueur d'onde.

7. Procédé selon une des revendications précédentes, **caractérisé en ce que**, le premier motif de mesure (6) est projeté dans un premier état de polarisation ou dans une première direction de polarisation et le deuxième motif de mesure (6) est projeté dans un deuxième état de polarisation ou dans une deuxième direction de polarisation, en particulier simultanément, et
le dispositif de détection (12) est configuré pour être sélectif en polarisation ou sensible à la polarisation de telle manière que la première image soit capturée en capturant principalement la lumière de la première direction de polarisation ou du premier état de polarisation et la deuxième image est fournie par détection prédominante de la lumière de la deuxième direction de polarisation ou du deuxième état de polarisation.

8. Scanner intra-oral (100) pour détecter la topographie de la surface (1) d'un objet translucide, notamment dentaire (O) dans un procédé selon une quelconque des revendications précédentes, comprenant un dispositif de projection (11), un dispositif de détection (12) et un avec le dispositif de projection (11) et le dispositif de détection (12) fonctionnellement connecté au dispositif informatique (121),
- dans lequel le dispositif de projection (11) comporte au moins une source lumineuse (30) et au moins deux éléments optiques diffractifs (31) inclut et est conçu pour projeter un schéma de mesure global sur des zones partielles (B.I, B.II) de la surface (1) de l'objet translucide (O),
le motif de mesure global comprend au moins deux motifs de mesure différents (6),
les motifs de mesure (6) peuvent être projetés chacun sur la surface (1) et présentent chacun plusieurs lignes de mesure (9) parallèles entre elles,
aux motifs de mesure (6) est associé un des éléments optiques diffractifs (31) au moyen duquel les lignes de mesure (9) peuvent être générées par diffraction de la lumière, et
la au moins une source lumineuse (30) illumine les éléments optiques diffractifs (31) avec une lumière polarisée linéairement dans une direction de polarisation (71), et entre la surface (1) et le dispositif de détection (12) un filtre de polarisation linéaire (70) est disposé, dont la direction de transmission (72) correspond à la direction de polarisation (71),
- dans lequel le dispositif de détection (12) est configuré pour fournir une première image et une deuxième image de la sous-zone respective (B.I, B.II) pour fournir la surface (1), et dans la première image un premier des au moins deux motifs de mesure (6) est projeté sur la zone partielle respective (B.I, B.II) de la surface (1) et dans la deuxième image un deuxième des au moins deux motifs de mesure (6) est projeté sur la zone partielle respective (B.I, B.II) de la surface (1),
- dans lequel le dispositif informatique (121) est configuré pour
détecter une première topographie partielle de la première zone partielle (B.I) de la surface (1) et une deuxième topographie partielle de la deuxième zone partielle (B.II) de la surface (1), respectivement au moyen de la triangulation en utilisant la première image respective et/ou la deuxième image respective, et
détecter la topographie de la surface (1) en superposant au moins partiellement la première topographie partielle et la deuxième topographie partielle de la surface (1).

9. Scanner intra-oral (100) selon la revendication 8, **caractérisé en ce que** les éléments optiques diffractifs (31) sont disposés sur un substrat commun (31S), notamment les structures de diffraction (36) des éléments optiques diffractifs (31) sont agencées dans un plan commun.

10. Scanner intra-oral (100) selon une quelconque des revendications 8 ou 9, **caractérisé en ce qu'**au moins un des motifs de mesure (6) est à symétrie ponctuelle par rapport à un centre de motif de mesure (37) et éventuellement l'élément optique diffractif associé (31) est conçu comme un élément optique diffractif binaire.

11. Scanner intra-oral (100) selon une des revendications 8 à 10, **caractérisé en ce que** les motifs de mesure (6) peuvent chacun être projetés sur la surface (1) en direction d'un axe de projection (P) et des axes de projection (P) sont disposés dans un plan d'axe de projection commun, qui est parallèle à la direction de lignes de mesure (9) et qu'optionnellement au moins un point central (37) du motif de mesure d'un motif de mesure (6) est disposé dans le plan d'axe de projection commun.

12. Scanner intra-oral (100) selon une quelconque des revendications 8 à 11, **caractérisé en ce que** le dispositif de projection (11) comprend un premier dispositif de réglage (V1) d'une position d'au moins un axe de projection (P) et/ou un deuxième dispositif de réglage (V2), dans lequel au moyen du deuxième dispositif de réglage (V2)
- une distance entre un des éléments optiques diffractifs (31) et la au moins une source lumineuse (30) peut être changée ou
- une distance entre une lentille et la au moins une source lumineuse (30) peut être changée.

13. Scanner intra-oral (100) selon une quelconque des revendications 8 à 12, **caractérisé en ce que** la projection du motif de mesure (6) s'effectue à différents angles d'ouverture (33).

14. Scanner intra-oral (100) selon une quelconque des revendications 8 à 13, **caractérisé en ce que** le dispositif de projection (11) comprend un dispositif de réduction du chatoiement (V3) et éventuellement au moins un des éléments optiques diffractifs (31), notamment en translation, peut être déplacé lors de la projection du motif de mesure global.

15. Scanner intra-oral (100) selon une quelconque des revendications 8 à 14, **caractérisé en ce que** le dispositif de projection (11) comprend au moins une lentille astigmate.

16. Scanner intra-oral (100) selon une des revendications 8 à 15, **caractérisé en ce qu'**au moins un des éléments optiques diffractifs (31) a un effet de focalisation de la lumière.

17. Scanner intra-oral (100) selon une quelconque des revendications 8 à 16, **caractérisé en ce que** le dispositif de projection (11) comprend au moins un séparateur de faisceau (50) et au moins un modulateur spatial de lumière (53).

18. Scanner intra-oral (100) selon une des revendications 8 à 17, **caractérisé en ce que** le dispositif de projection (11) comprend un dispositif d'éclairage (B) pour générer un éclairage non structuré sur la surface (1) de l'objet (0) avec une intensité uniformément répartie et éventuellement l'éclairage rouge, vert, bleu, blanc, ultraviolet, proche lumière infrarouge ou infrarouge ou une combinaison de celles-ci.

19. Scanner intra-oral (100) selon une quelconque des revendications 8 à 18, **caractérisé en ce que** la au moins une source lumineuse (30) est réalisée sous forme de source lumineuse laser,
et la source de lumière laser est monomode dans une première dimension et multimode dans une deuxième dimension, dans lequel la deuxième dimension est alignée parallèlement ou perpendiculairement à la direction des lignes de mesure (9),
et/ou au moins un paramètre de fonctionnement de la source de lumière laser est régulé et/ou le au moins un paramètre de fonctionnement peut être modulé avec une fréquence dans la plage de 1 à 1000 MHz.
